# EUROPEAN PATENT APPLICATION

(11) **EP 0 907 132 A1**
(43) Date of publication of application: **07.04.1999**
(21) Application number: 98118512.7
(22) Date of filing: 30.09.1998
(51) Int. Cl.: G06F 17/30, G06F 1/00

(54) **Page transition system, device to implement the same, and medium having a program and data recorded thereon**

(30) Priority: 30.09.1997 JP 265456/97
(71) Applicant: Hitachi, Ltd., Chiyoda-ku, Tokyo 101-8010 (JP)
(72) Inventor: Sakamoto, Kazuhiko, Kawasaki-shi, Kanagawa-ken (JP); Tominaga, Masasuke, Sagamihara-shi, Kanagawa-ken (JP); Tsuchida, Nobuki, Yokohama-shi, Kanagawa-ken (JP); Tomita, Hiroshi, Kawasaki-shi, Kanagawa-ken (JP); Tsuru, Hideo, Yokohama-shi, Kanagawa-ken (JP); Ishikawa, Teruhisa, Tokyo (JP); Shindou, Kousuke, Yokohama-shi, Kanagawa-ken (JP); Yoshino, Matsuki, Yokohama-shi, Kanagawa-ken (JP); Masuishi, Tetsuya, Machida-shi, Tokyo (JP)
(74) Representative: Strehl Schübel-Hopf & Partner

(57) **Abstract**

The invention provides a technique for preventing a page transition that the designer does not intend, while a page transition having a rule of order is executed. In a page transition system for performing a transition between a plurality of pages, a transition destination page to transit from a transition source page is extracted, a page transition rule to present a transition source page that is permitted to transit to the concerned transition destination page is made, and when the current page name of a session to which a transition to the concerned transition destination page is requested is coincident with the transition source page name in the foregoing page transition rule, the transition to the concerned transition destination page is executed.

## Description

### FIELD OF THE INVENTION

The present invention relates to a page transition system for displaying a plurality of pages. Specifically, to a technique effective for use in a page transition system that transits a plurality of pages in a specific order, when utilizing the resources of the WWW (media information including documents, images, sounds, animations, etc.) through networks and the Internet.

### BACKGROUND OF THE INVENTION

The general WWW (World Wide Web) will now be described briefly. The WWW includes a WWW server to provide the resources (media information including documents, images, sounds, animations, etc.) existing on the networks and the Internet, and WWW browsers to take out the resources. The WWW server is a program executed by the server computer. The WWW server receives a request from a WWW browser, and retrieves the requested resource to sends it to the browser. The WWW browser is a program executed by the client computer. The WWW browser makes a remote connection to the WWW server, reguests a specific resource to the WWW server, and displays the resource received from the WWW server on a display of the WWW browser.

The resource displayed on the WWW browser is expressed as a page described by the HTML (Hyper Text Markup Language). The HTML is a language used to specify a page layout and a hyper link, which defines the syntax of a dedicated built-in instruction and the location of a resource. The HTML is detailed in WEBMASTER quick reference, ISBN 4-900900-332-X, written by Stephen Spainhour, Valerie Quercia, Shigeya Tanabe, published by Ohm Co. Ltd., on April 30, 1997. As of July 1997, many dedicated tools for making the pages are available on the market. The FrontPage97 from Microsoft Corporation (US), for example, is one of these tools (Microsoft and FrontPage are the trade marks belonging to US Microsoft Corporation in the USA and the other countries).

A conventional system to define a page transition of a WWW application will now be described. The WWW application is implemented by a set of a series of linked pages. The page of the WWW application is made using a text editor, etc., using FrontPage97, for example. The system to define a page transition of the WWW application is implemented by linking a prepared transition source page with a transition destination page. The foregoing linkage generally forms a network structure. The foregoing network structure becomes increasingly complicated as the number of pages and the number of links are increased, and it becomes increasingly difficult to judge whether a transition developed by a designer is correct or not.

As a technique to statistically analyze a linkage between pages, the document preparation support device (Matsushita Information System Corporation) is disclosed in the Japanese Patent Application Laid-open Hei 9-81548 (herein, referred to as Example 1). Example 1 discloses a device that analyzes a linkage between pages formed into a network structure, and presents the analyzed result on a display. The device extracts a link source and a link destination of a page pointed at and displays them using visual graphics. This arrangement will make it possible to infallibly recognize the relation between individual pages and make a correct page.

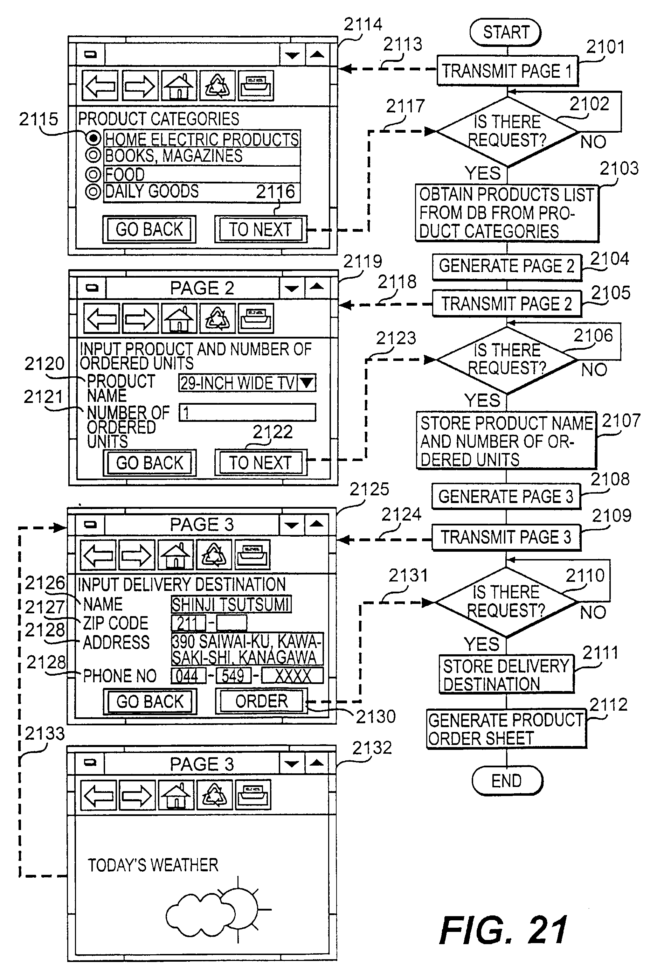

Next, a conventional system to execute a page transition of the WWW application will be described. Fig. 21 illustrates an example in which the WWW application is executed. The window shown on the left of the drawing represents the WWW browser executed by a client, and the flow on the right represents the processing flow of the WWW server program executed by a server. This example is a WWW application for ordering a product. To describe it briefly, the WWW application includes a page 1 for selecting a type of product to order, a page 2 for selecting a product to order, and a page 3 for inputting a destination to which an ordered product is delivered. The procedure will now be described.
(1) The process 2101 transmits (2113) the page 1 to the WWW browser 2114. After the transmission, the process 2102 brings the WWW server into a wait state to receive a request.
(2) The WWW browser 2114 displays the page 1 transmitted by the process 2101.
(3) On the page 1 displayed on the WWW browser 2114, by selecting the 'home electronics' radio button 2115 and then clicking the 'next' button 2116, the user requests (2117) the WWW server to send the page for selecting a product of the selected product type.
(4) When the process 2102 receives the request (2117) from the browser 2114, the following processes are executed. The process 2103 acquires from the DB a list of products of the selected product type. The process 2104 generates the page 2 for inputting a product and an order quantity from the acquired product list. The process 2105 transmits (2118) the generated page 2 to the WWW browser. After the transmission, the process 2106 brings the WWW server into a wait state to receive a request.
(5) On the page 2 displayed on the WWW browser 2119, the user selects a product from the 'product name' combo-box 2120 and inputs an order quantity in the 'order quantity' text box 2121, and then clicks the 'next' button 2122, thus informing (2123) the WWW server of the request to send the page for inputting a destination to which a selected product is delivered.
(6) When the process 2106 receives the request (2123) from the browser 2119, the following processes are executed. The process 2107 stores the product name and order quantity selected. The process 2108 generates the page 3 for inputting a destination to which a product is delivered. The process 2109 transmits (2124) the generated page 3 to the WWW browser. After the transmission, the process 2110 brings the WWW server into a wait state to receive a request.
(7) On the page 3 displayed on the WWW browser 2125, the user inputs the name of the person to order in the 'customer name' text box 2126, inputs the postal code number in the 'postal code number' text box 2127, inputs the address in the 'address' text box 2128, inputs the telephone number in the 'telephone number' text box 2129, and then clicks the 'order' button 2130, thus informing (2131) the WWW server of the order request to deliver the product selected on the page 2 to the inputted destination.
(8) When the process 2110 receives the request (2131) from the browser 2125, the following processes are executed. The process 2111 stores the destination of the ordered product (name, postal code number, address, telephone number). The process 2112 prepares a product purchase order from the destination of the ordered product. According to the foregoing procedure, the WWW browser is able to execute the WWW application while transiting the pages.

Furthermore, the WWW browser possesses a page content recording function to hold page contents transited during execution, and a page location recording function to hold the locations (URL: Universal Resource Locator) of the pages transited.

The page content recording function stores the contents of pages already transited in the memory of the client computer. To employ the page content recording function makes it possible to transit the pages by the WWW browser rereading the pages stored in the memory of the client computer without intervention of the WWW server, when returning to one page prior, returning to another one page prior, or advancing one page forward.

On the other hand, the page location recording function is one whereby the WWW browser stores the URL of the transited page in the memory. To specify a URL stored by the page location recording function makes it possible to transit from a certain page to a page that cannot be transited directly. The Netscape Navigator from Netscape Communications Corporation (US) and the Internet Explorer from Microsoft Corporation (US) are generally known as a typical WWW browser in which the foregoing page content recording function and page location recording function are incorporated. Further, the details of the page content recording function and page location recording function are mentioned in the specification of the foregoing WWW browser (Netscape Communications, Netscape, Netscape Navigator are the trade marks belonging to US Netscape Communications Corporation, and Microsoft, Internet Explorer are the trade marks belonging to US Microsoft Corporation).

### SUMMARY OF THE INVENTION

Given the foregoing description of the prior art, a problem to be solved by the invention is that it is impossible to inhibit the page transition by the foregoing page content recording function and the page transition by the foregoing page location recording function, of the page transitions during execution of the WWW application.

Fig. 21 illustrates an example in which transactions extending over a plurality of pages cannot properly be processed. To specify a page location recorded by the page location recording function makes it possible to transit (2133) from the page X displayed on the WWW browser 2132 to the page 3 without intervention of the WWW server. However, the page 3 does not become effective until it passes through the page 1 and the page 2. Provided that the product type is not determined on the page 1, and the selection of a product and the order quantity are not specified on the page 2, conflicts will occur in the processes of data inputted on the page 3, which the WWW server executes.

According to the officially announced example 1, it is possible to recognize the relation between pages without making a mistake and make correct pages by extracting a link source and a link destination of a page aimed at and displaying using visual graphics. However, if the WWW browser employs the foregoing page content recording function or the foregoing page location recording function during execution of the WWW application, it will be impossible to execute the WWW application exactly in accordance with the page transition intended by the designer. This problem is also mentioned on page 213 through page 215 of the NIKKEI Open System (no. 51), issued in June, 1997.

Further, in the conventional WWW application, another problem is that when a user access authority level is set on a plurality of pages having a rule of order in the page transition, a higher user access authority level is set on the first page, even a user having a lower access authority level is permitted to transit the first several pages, and a transition to a specific transition destination page is not limited. Also, in the conventional WWW application, when a higher user access authority level has been set on a specific transition destination page, a page transition request from a user who does not satisfy the access authority is rejected. However, in the midst of executing a transition to a plurality of pages having a rule of order in the page transition, when the request of a page transition to a specific transition destination is rejected in practice, the user is required to log in again with a user ID of a higher access authority, and then to execute the page transition again from the first of a plurality of pages having a rule of order in the page transition.

It is therefore an object of the present invention to solve the foregoing problems and to provide a technique capable of preventing a page transition that the designer does not intend.

Another object of the invention is to provide a technique capable of collectively controlling a plurality of page transition rules.

Another object of the invention is to provide a technique capable of setting different access authorities on each of transition destination pages having a rule of order in the page transition.

Another object of the invention is to provide a technique capable of continuing a page transition by altering the access authority of a user, when the access authority required for the page transition is found to be insufficient in the middle of processing the page transition having a rule of order.

In the page transition system according to this invention which executes a transition between a plurality of pages, a transition destination page transiting from a transition source page is extracted, a page transition rule to present a transition source page that is permitted to transit to the concerned transition destination page is made, and the transition to the concerned transition destination page is executed when the current page name of a session to which a transition to the concerned transition destination page is requested is coincident with the transition source page name of the foregoing page transition rule.

The page transition definition system of this invention extracts a transition destination page transiting from a transition source page, sets the concerned transition source page and the extracted transition destination page in a pair on a page transition table, and thereafter sets on the foregoing page transition table a transition source fixing flag that indicates to or not to permit the transition to the concerned transition destination page from other than a specific transition source page.

Next, the system extracts a transition source page transiting to a transition destination page from the foregoing page transition table, and sets the concerned transition destination page and the foregoing extracted transition source page in a pair on a transition rule table. The system reads out the transition source pages of the transition destination pages from the foregoing transition rule table, adds the page transition rule to present the transition source page that is permitted to transit to the concerned transition destination page to the concerned transition destination page as a transition source check template statement, or outputs a page transition rule of the transition destination pages to a transition rule file, thus collectively controlling a plurality of page transition rules.

The page transition execution system of this invention controls a current page name to indicate a page currently transiting for each session to set on a page control table, reads out the page transition rule from the transition source check template statement added to the concerned transition destination page or the transition rule file, and executes the transition to the concerned transition destination page when the current page name of a session to which the transition to the concerned transition destination page is requested is coincident with the transition source page name of the foregoing page transition rule.

According to the page transition system of this invention which executes a transition between a plurality of pages, it becomes possible to generate the page transition rule to judge whether a transition source page can transit to a specific transition destination page, and thereby it becomes possible to prevent a page transition that the designer does not intend, even when the WWW browser uses the page content recording function or the page location recording function during execution of the WWW application.

As mentioned above, according to the page transition system of this invention, a page transition is executed to comply with the page transition rule to indicate a transition source page that is permitted to transit to a specific transition destination page; and therefore, it is possible to prevent a page transition that the designer does not intend while executing to transit a page having a rule of order in the page transition.

These and other objects, features and advantages of the present invention will become more apparent in view of the following detailed description of the present invention in conjunction with the appended drawings.

### BRIEF DESCRIPTION OF THE DRAWINGS

FIG. 1 shows a configuration of a page transition defining system;
FIG. 2 is a flowchart of a page transition defining system;
FIG. 3 shows a screen designating storage directory of a WWW application;
FIG. 4 is a flowchart for displaying a WWW application;
FIG. 5 shows an HTML file;
FIG. 6 shows a page transition table;
FIG. 7 shows a screen having a WWW application displayed;
FIG. 8 shows a screen having a WWW application edited;
FIG. 9 is a flowchart of editing a page property;
FIG. 10 shows a flowchart of creating a page transition rule;
FIG. 11 shows a page transition rule;
FIG. 12 is a flowchart of creating pages with a page transition check code;
FIG. 13 shows a page transition check template;
FIG. 14 shows an HTML file with page transition check codes;
FIG. 15 shows a configuration of a page transition execution system;
FIG. 16 is a flowchart of a WWW client;
FIG. 17 shows a session management table;
FIG. 18 is a flowchart of a page transition executing system;
FIG. 19 shows a page management table;
FIG. 20 is a flowchart of a page transition executing system;
FIG. 21 is used for explaining the contents of Japanese Patent Publication JP-9-81548;
Fig. 22 illustrates a functional construction of the page transition definition device to generate the transition rule file of the embodiment 2;
Fig. 23 is a flowchart to present the processing procedure of the page transition definition device of the embodiment 2;
Fig. 24 illustrates one example of a display screen whereby the type of the output of the embodiment 2 is specified;
Fig. 25 illustrates one example of a transition rule file 2202 of the embodiment 2;
Fig. 26 is a flowchart to illustrate the processing procedure to generate a transition rule file 2506 of the embodiment 2;
Fig. 27 illustrates one example of a page transition table 113 to which the user access authority level of the embodiment 2 is added;
Fig. 28 is a flowchart to illustrate the processing procedure to set the user access authority level of the embodiment 2;
Fig. 29 illustrates one example of a display screen to set the user access authority level of the embodiment 2;
Fig. 30 is a flowchart to illustrate the processing procedure to edit the page property of the embodiment 2;
Fig. 31 illustrates one example of a page transition rule table 114 to which the user access authority level of the embodiment 2 is added;
Fig. 32 is a flowchart to illustrate the processing procedure to generate a page transition rule to which the user access authority level of the embodiment 2 is added;
Fig. 33 illustrates one example of a transition rule file 2202 to which the user access authority level of the embodiment 2 is added;
Fig. 34 is a flowchart to illustrate the processing procedure to generate a transition rule file to which the user access authority level of the embodiment 2 is added;
Fig. 35 illustrates a functional construction of the page transition execution device to interpret and execute the transition rule file of the embodiment 2;
Fig. 36 illustrates one example of a user file 3504 of the embodiment 2;
Fig. 37 illustrates one example of a system page 3502 of the embodiment 2;
Fig. 38 is a flowchart to illustrate the processing procedure of a server computer 1501 of the embodiment 2;
Fig. 39 illustrates one example of a request URL from the WWW browser of the embodiment 2;
Fig. 40 illustrates one example of a page control table 1513 to which the user access authority level of the embodiment 2 is added;
Fig. 41 illustrates one example of a user control table 3506 of the embodiment 2;
Fig. 42 illustrates one example of a rule control table 3505 of the embodiment 2;
Fig. 43 is a flowchart to illustrate the processing procedure to analyze a page request URL from the WWW browser of the embodiment 2;
Fig. 44 is a flowchart to illustrate the processing procedure to check the user access authority level of the embodiment 2;
Fig. 45 is a flowchart to illustrate the processing procedure to analyze a request from the system page 3502 of the embodiment 2;
Fig. 46 is a flowchart to illustrate the processing procedure of a page generating process 4403 that makes a page to be transmitted to the WWW browser of the embodiment 2;
Fig. 47 illustrates one example of a HTML to alter the display content of a page in accordance with the user access authority level of the embodiment 2;
Fig. 48 is a flowchart to illustrate the processing procedure to alter the display content of a page in accordance with the user access authority level of the embodiment 2;
Fig. 49 illustrates a functional construction of the WWW browser program of the embodiment 3;
Fig. 50 is a flowchart to illustrate the processing procedure of the WWW browser program of a client computer 4903 of the embodiment 3;
Fig. 51 illustrates one example of a page location record table 4916 of the embodiment 3;
Fig. 52 is a flowchart to illustrate the processing procedure of a recording process 5015 to the page location record table 4916 of the embodiment 3; and
Fig. 53 is a flowchart to illustrate the processing procedure of a process 5017 to display a page recorded on the page location record table 4916 of the embodiment 3.

### DETAILED DESCRIPTION OF THE PREFERRED EMBODIMENTS

### EMBODIMENT 1

The page transition system relating to the embodiment 1 will hereafter be described, in which the page transition rule to indicate a transition source page that is permitted to transit to a specific transition destination page is added to the concerned transition destination file as a transition source check template statement, and transitions to a plurality of pages having a rule of order are executed in accordance with this page transition rule.

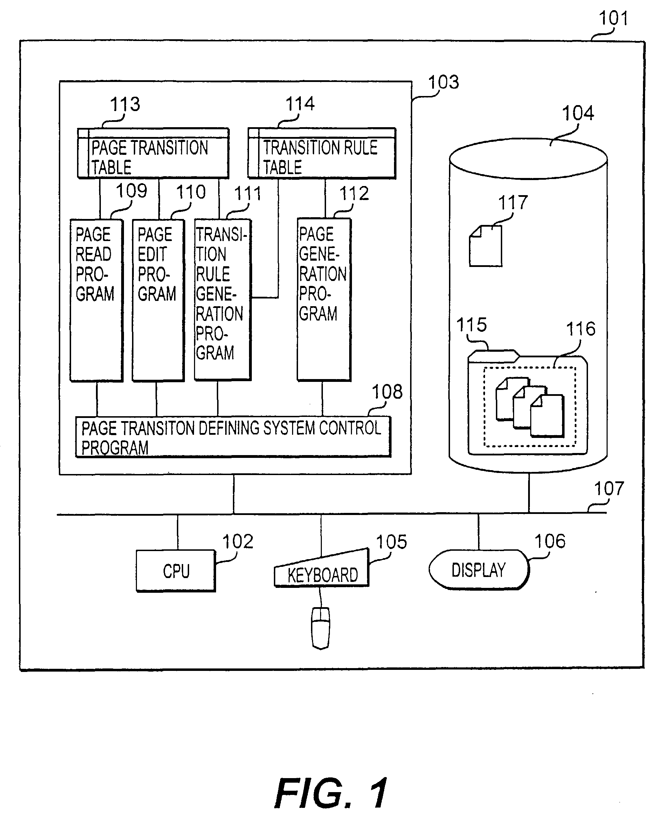

Hereinafter, an embodiment according to the present invention will be described in detail. FIG. 1 shows an example of a functional block diagram of a page transition defining system embodying the present invention. A frame 101 encircled by a solid line shows a computer executing a page transition defining system. The computer includes a CPU102 for executing and interpreting a program, a storage unit 103 for loading a program therein, an external storage unit 104 for storing a program and data, a keyboard 105 for inputting data, a bus 107 connecting data handled by an output unit 106, and a bus connecting the CPU102, the memory 103, the external storage unit 104, the keyboard 105, the output unit 106. In the external storage unit 104, a page 116 to be an input/output file of a page transition defining system embodying the present invention is stored in a directory 115 and a page transition originator check template statement 117 for determining a transition originating page to which transition can be effected is stored in a transition destination page in executing the WWW application. In the storage 103, a page transition defining system embodying the present invention is loaded. The page transition defining system is composed of: (1) a page transition defining system control program 108 for controlling the page transition defining system; (2) a page reading program 109 for reading all pages 116 of the WWW application from a directory 115 that a user specifies, extracts a transition destination page to which a transition is effected from a transition originating page, pairing a transition originating page and the extracted all transition destination page to thereby set the paired page to a page transition table 113; (3) a page editing program 110 for setting a page set to the page transition destination page to the page transition table 113; (4) a transition rule generation program 111 for pairing the page and all of the extracted transition originating pages and setting the paired pages; and (5) a page generation program for setting the set transition originating page to a transition originating check template statement 117 from the transition rule table 114 and adding the set transition originating check template statement 117 to the transition destination page.

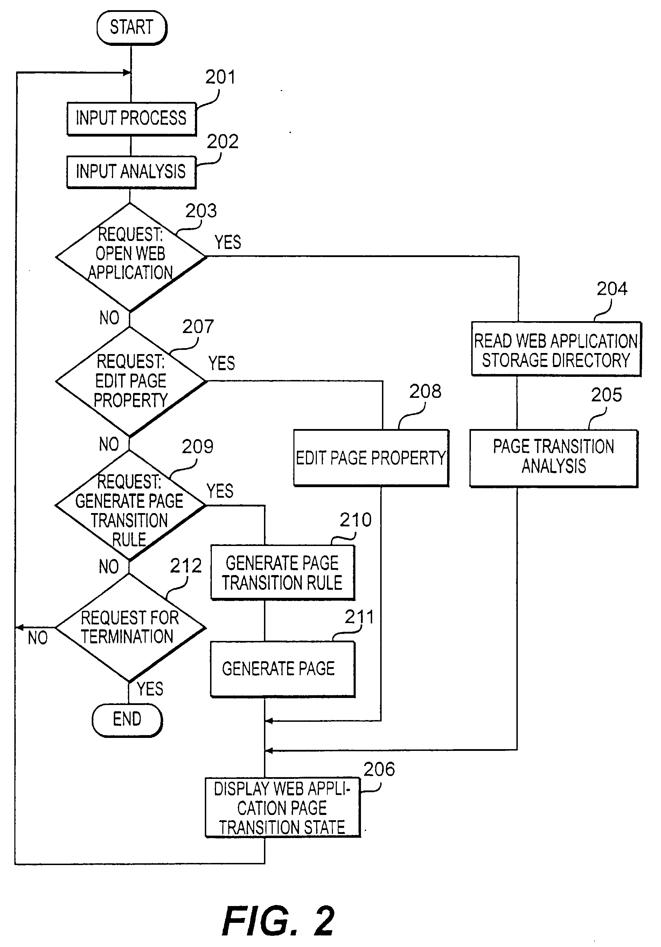

FIG. 2 shows an outlined flowchart of a page transition defining system embodying the present invention. A process 201 accepts an input to a page transition defining system inputted from a keyboard 105 by a user. A process 202 analyzes the inputted contents accepted in the process 201. A process 203 determines whether or not a request of a user is a process to open a WWW application based on the analysis result. If the process 203 is a process to open the WWW application, the processing proceeds to a process 204, and if the process 203 is not a process to open the WWW application, the processing proceeds to a process 207. The process 204 reads a directory inputted through a keyboard 105 by a user. The directory is a directory 115 in which the directory is stored. The process 205 reads all pages 116 stored in the read directory 115, extracts a set of transition destination pages to which a transition can be effected from each page of all pages to pair the transition originating page with each of all pages, and sets it to the transition table 113. A process 206 graphically displays a transition state between pages on a display 106 from a page transition table 113. A process 207 determines whether or not a request from a user is a page property edit process from the analysis result of the process 206. If it is a page property edit process, the process proceeds to a process 208, and if not, the process proceeds to a process 209. The process 208 sets transition destination page of an arbitrary page to a transition destination page that a user specifies, and sets the page set to the transition destination page to a page transition table 113. The process 209 determines whether or not the request from the user is a page generation process from the analyzed result of the process 20. If it is determined to be the page generation process, the processing proceeds to a process 210, when not the page generation process, the processing proceeds to a process 211. The process 210 extracts a set of transition originating pages to which a transition is effected, and pairs a transition destination page and each of all extracted transition originating pages, thereby setting it to the transition rule table 114. The process 211 sets transition originating pages from which a transition can be effected to the transition originating check template statement 117 from the transition rule table 114, and adds the set transition originating template statement 117 to the transition destination page. The process 212 determines whether or not a request from a user is a termination process from the analyzed results. If it is a termination process, the processing terminates the flow and page transition defining system. If it is not a termination process, the process proceeds to a process 201.

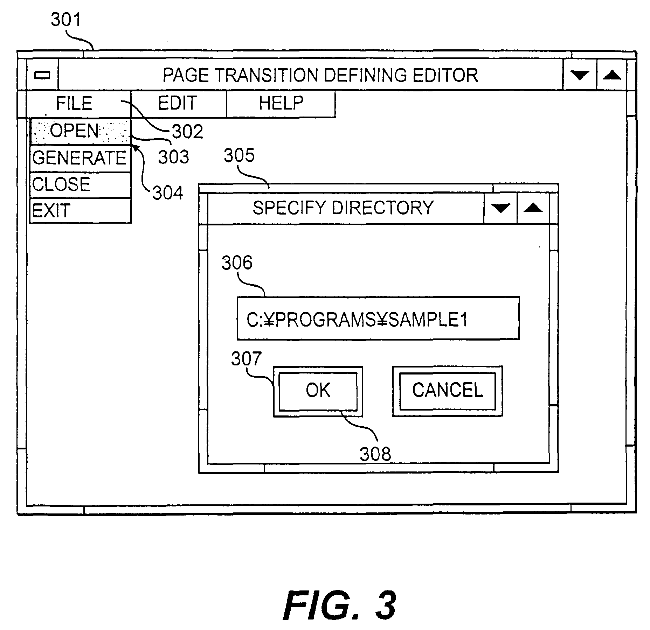

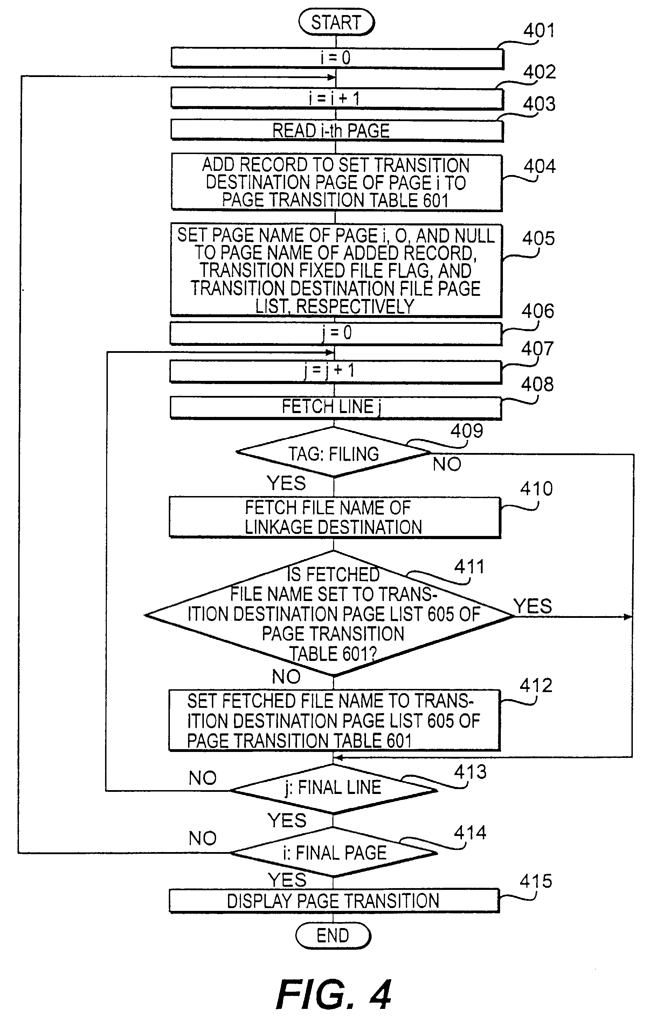

FIG. 3 shows an example of a screen operation of a process to read a directory inputted by a keyboard 105 from a user. The window 301 is a page transition defining editor of a page transition defining system embodying the present invention. From a file menu 302, by selecting an open command 303 using a mouse 304, a dialog 305 for specifying a directory is displayed. When a directory that stored the WWW application on the text box 306 is specified and consecutively a button 307 is selected by using a mouse 308, a directory specifying pages of the WWW application is read. Next, a process 205 will be explained with reference to FIG. 4 in which all read pages 116 stored in the directory 115 are read-in, a set of transition destination pages from which a transition can be effected is extracted, and the transition originating page and extracted transition destination page are paired, thereby setting it to the page transition table 113. A process 401 initializes a control variable i by zero [0]. The value of control variable i represents a number of pages. The process 402 adds one [1] to the control variable i. A process 403 reads i-th page. A process 404 adds a record to set a transition destination page of i page to the page transition table 601. A process 405 sets a file name of page i, zero[0], and NULL to a page name of the added record, the transition originating fixed flag 603, and the transition destination page list 604, respectively. A process 406 initializes a control variable j by zero [0]. A value of the control variable j represents the number of statement lines read in the process 403. A process 407 adds one [1] to the control variable j. A process 408 fetches j-th line on page i. A process 409 determines whether or not a tag written in the fetched line represents filing. If the tag represents filing, the processing proceeds to a process 410, while if not a filing tag, the processing proceeds to a process 413. A process 410 fetches a file name of a linkage destination. A process 411 determines whether or not a file name fetched in the process 410 in the transition destination page list 605 of a record of a page transition table 601 added in the process 404 has been already set. If the file name is set, the processing proceeds to a process 413, and if not, the processing proceeds to a process 412. The process 412 sets the file name fetched in the process 410 to the transition destination page list 605 of a record of the page transition table 606 added in the process 404. A process 413 determines whether or not a value of a control variable j is a final line on i-th page. If the value of control variable j represents a final line, the process proceeds to a process 414, and if not a final line, the processing proceeds to a process 407. The process 414 determines whether or not a value of the control variable i represents a final page of the WWW application stored in the directory 115. When a value of the control variable represents a final page, the processing proceeds to the process 415, while when not a final page, the processing proceeds to the process 402. A process 415 displays a page transition of a WWW application from a value set to a page transition table 601.

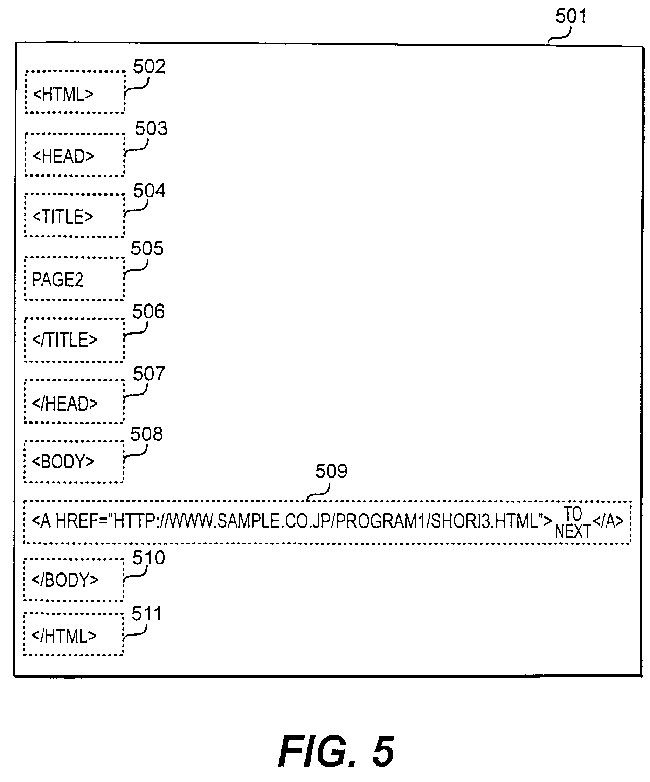

FIG. 5 shows an example of a page. The page 501 is described by using an HTML (Hyper Text Markup Language). The line 502 is a tag showing that the page 501 is an HTML file. The tag represents a character string sandwiched by characters "<" and ">". The line 503 is a tag showing a start of description of contents of an HTML file header. The line 504 is a tag showing a start of description of header contents of an HTML file. The line 505 is a character string describing a page title. A line 506 is a tag showing an end of description of a page title of a header being one of header contents. A line 507 is a tag showing an end of contents of a header of an HTML file. A line 508 is a tag showing a start of description of main contents of another HTML file. A line 509 is a tag connecting linkage relation to another HTML file. The line 510 is a tag showing an end of description of main contents of an HTML file. The line 511 is a tag showing an end of HTML file.

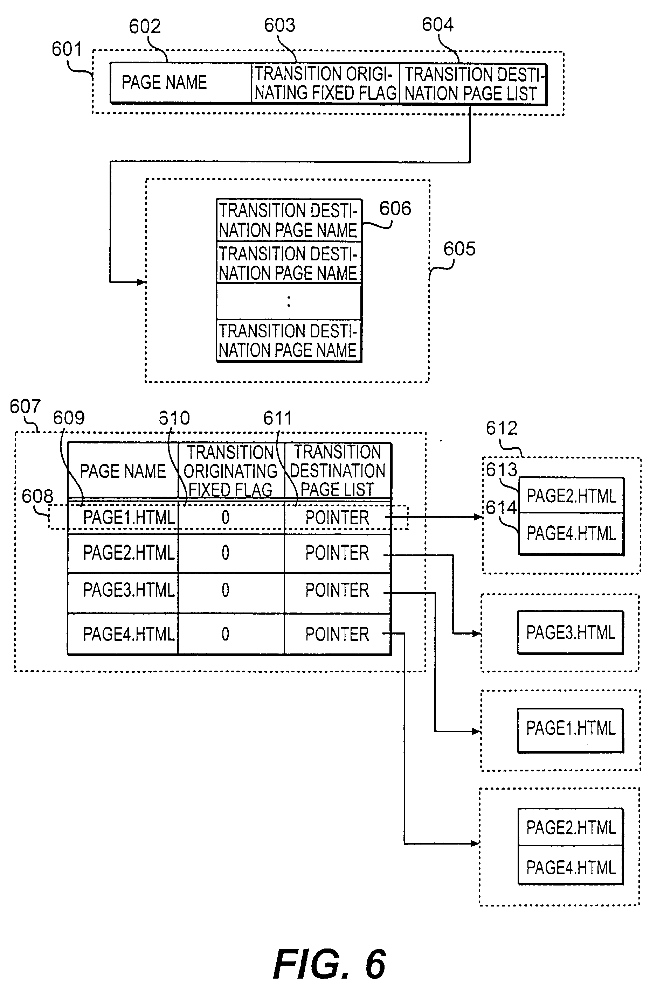

FIG. 6 shows a record format of the page transition table 113. The record 601 of the page transition table includes a page name 602, a transition originating fixed flag 603, and a transition destination page list 604. A file name of a page is set to the page file name 602. Zero [0] or one [1] is set to a transition originating fixed flag 603. When zero [0] is set, a transition is permitted to which a page name 602 is set from a page other than the page originating page. When one [1] is set, a transition to a page which is set to a page name 602 is not permitted for a page other than the pages that a user clearly specifies using a page transition defining editor. A list 605 of a transition originating page name 606 is set to a transition destination page list 604. Next, an example where specific data is set to the page transition table 113 will be explained. In the page transition table 113, data is set to four records. A file name "pagel.html" of a page is set to the page name 609 of a record 608, "0" which signifies that a page transition is permitted from a page other than the transition originating page, and a pointer of the transition destination page name 613 is set. Two file names of the transition destination page are set to the list 613. "page2.html" is set to the file name 613 and "page4.html" is set to the file name 614.

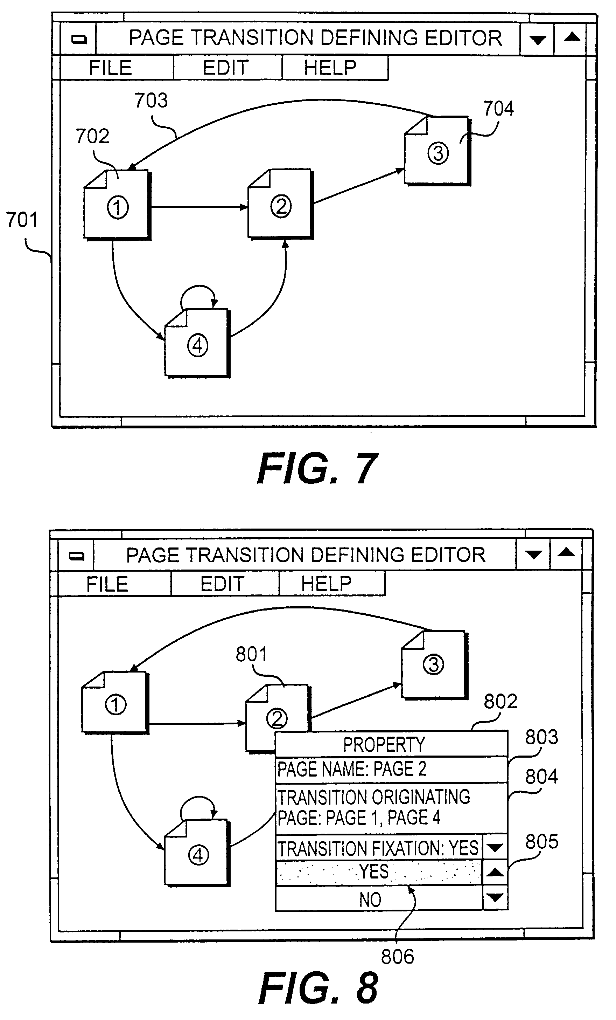

FIG. 7 shows an example of a page transition of the WWW application displayed on the display 106. A window 701 is a page transition defining editor of a page transition defining system embodying the present invention. A window 701 displays a page transition state of the WWW application. A page icon 702 represents a page within the WWW application. An arrow 703 represents a page transition. The arrow 703 indicates that a link is set to effect a transition from a page 703 to a page 702.

Next, an example of a screen operation that a transition destination page of an arbitrary page displayed on the display 106 is restricted to the transition page that a user specifies will be explained with reference to FIG. 8. By clicking a page icon 801 with the right button of a mouse, a page property menu 802 is displayed. The page property menu 802 is composed of a page name text 803, a transition originating page name list 804, and a transition fixed setting convolution box 805. A file name of a page is displayed on the page name text 803. A file name of a page to which a transition can be effected is displayed on the transition originating page name list 804. In the transition fixation convolution box 805, it is displayed whether or not a page to which a transition can be effected is restricted to the page displayed on the transition originating page list 804. By clicking with a mouse 806 the transition fixation setting convolution box 805 to selectively specify "YES" or "NO", it can be set.

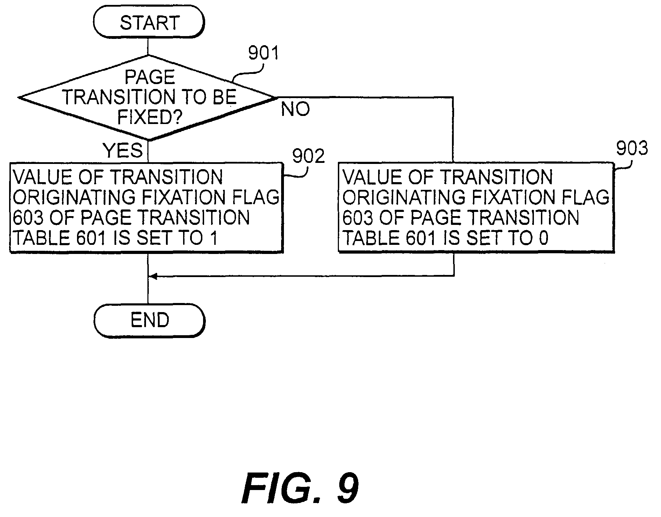

Next, FIG. 9 shows a screen operation flow shown in FIG. 8. A process 901 determines whether or not a page transition is fixed. When "YES" is selectively clicked, the processing proceeds to a process 902, while "NO" is selectively clicked, the processing proceeds to a process 903. The process 902 sets the page transition originating fixation flag 603 of the page transition table 601 is set to 1, followed by termination of the processing of the present flow. The process 903 sets a value of the transition originating fixation flag 603 of the page transition table 601 to zero [0], followed by termination of the processing of the present flow.

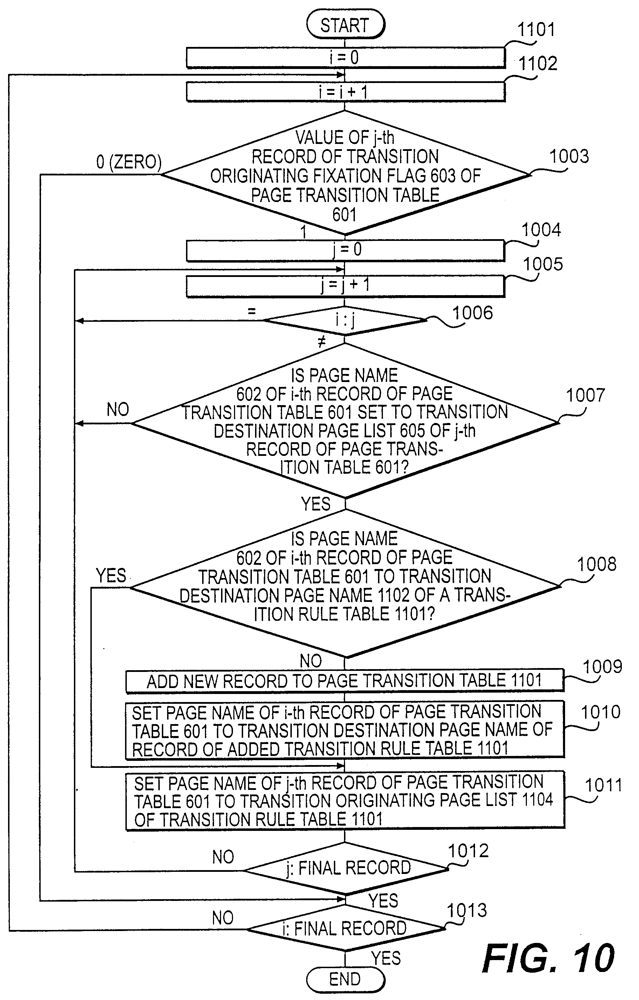

Next, a process 208 will be described with reference to FIG. 10 in which process, for all pages within a WWW application a transition originating page to each page of which transition can be effected is extracted from the page transition table 113, a transition destination page is paired with all the extracted transition originating pages, and the paired pages are set to the transition rule table 114. A process 1001 initializes a control variable i to zero [0]. A value of the control variable i represents the number of records in the page transition table 601. A process 1002 adds one [1] to the control variable i. A process 1003 determines a value of a transition originating fixation flag 603 of the j-th record of the page transition table 601. When the value is zero [0], the processing proceeds to a process 1013. When the value is one [1], the processing proceeds to a process 1004. The process 1004 initializes a control variable j to zero [0]. A value of the control variable j represents the number of records of the page transition table 601. A process 1005 adds one [1] to the control variable j. A process 1006 compares control variables i with j. When a value of i equals a value of j, the processing proceeds to the process 1005, while when the value of i differs from that of j, the processing proceeds to a process 1007. The process 1007 determines whether or not a value of a page name 602 of i-th record of the page transition table 601 is set to the transition destination page list 605 of j-th record of the page transition table 601. When set, the processing proceeds to a process 1008, while when not set, the processing proceeds to the process 1005. The process 1008 determines whether or not a value of the page name 602 of the i-th record of the page transition table 601 is set to a transition destination page name 1102 of the transition rule table 1101. When it is set, the processing proceeds to a process 1101, while when not set, the processing proceeds to a process 1009. The transition rule table 1101 described above is a table in which transition rule table 1101 is made to correspond to a transition originating table which can be transited to a transition destination page. A process 1009 adds a new record for setting a page 602 of the i-th record of the page transition table 601 to the transition rule table 1101. The process 1010 sets a page name 602 of the i-th record of the page transition table 601 to transition destination page name 1102 of the newly added transition rule table 1101. A process 1011 sets a page name 602 of the j-th record of the page transition table 601 to the transition originating page list 1104 of the transition rule table 1101. A process 1012 determines whether or not a control variable j indicates a final record. When the control variable j indicates a final record, the processing proceeds to a process 1013, while when the control variable j does not indicate the final record, the processing proceeds to the process 1005. A process 1013 determines whether or not a value of the control variable i indicates a final record. When the control variable i indicates a final record, the present flow is terminated. Otherwise, the processing proceeds to process 1002.

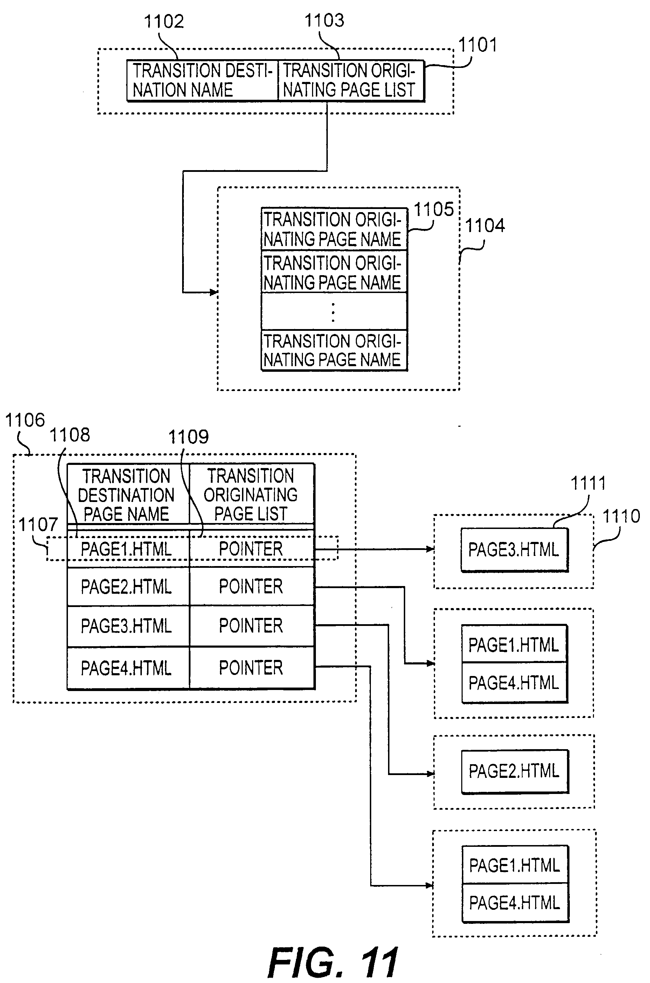

FIG. 11 shows a record format of the transition rule table 114. The record 1101 of the transition rule table 114 is composed of a transition destination page name 1102, and a transition originating page list 1103. A file name of a transition destination page name is set to a transition destination page name 1102. A list 1104 of the transition originating page name 1105 is set to the transition originating page list 1103. Next, an example in which specific data is set to the transition rule table 114 will be explained. Data is set to four [4] records in the transition rule table 114. A file name "page1.html" of the transition destination page and a pointer of a list of transition originating page names 1110 are set to a transition destination page name 1108 of the record 1109 and the transition originating page list 1107, respectively. Pointers of the transition originating page name 1110 of the transition destination page name are set to the list 1110. "page3.html" is set to the file name 1111.

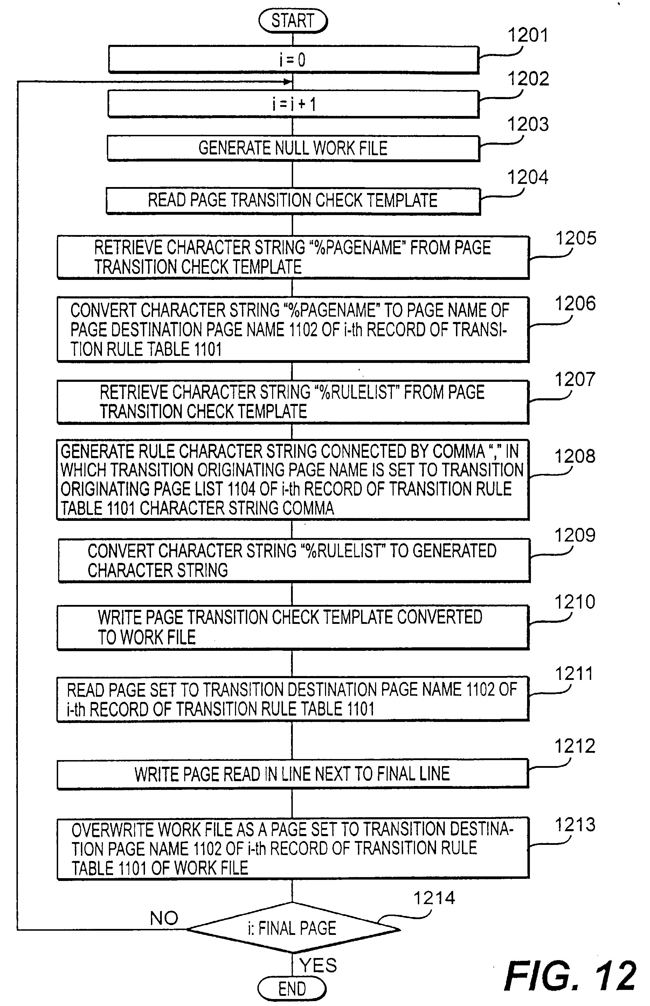

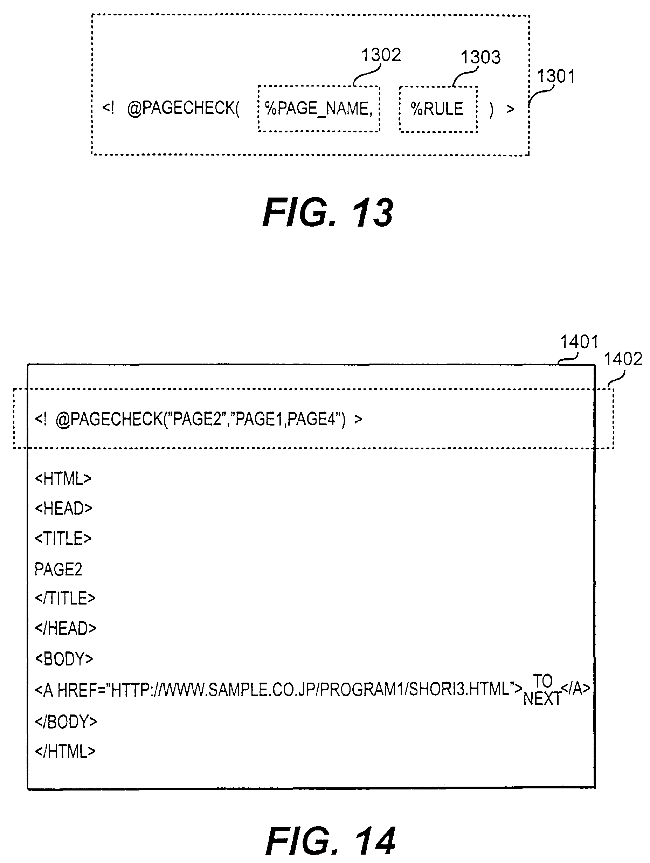

Next, a process 209 will be described with reference to FIG. 12 in which, for all pages whose transition originating page are determined from the transition rule table 114, a transition originating page to which a page transition can be effected is set to the transition checkplate statement 117, and the transition originating template statement 117 is added to the transition destination page. The process 1201 initializes a control variable i by zero [0]. The value of a control variable i represents the number of records of the transition rule table 1101. A process 1202 adds the control variable i to one [1]. A process 1203 generates a vacant work file for generation. A process 1204 reads a page transition check template 117. A process 1205 retrieves a replacement character string "%PageName" from the read page transition check template 117. A process 1206 converts the character string "%PageName" to a character string set to a transition destination page name 1102 of the i-th transition rule table 1101. A process 1207 retrieves the replaced character string "^{%}RuleList" from the read page transition check template 117. A process 1208 generates a character string obtained by connecting transition originating page names 1105 set to the transition originating page list 1104 of the i-th record of the transition rule table with a comma ",". A process 1209 converts the replaced character string "%RuleList" to the generated rule character string. A process 1210 writes the page transition check template 117 in the work file for generation. A process 1211 reads a page set to the transition destination page name 1102 in the i-th record of the transition rule table 1101. A process 1212 writes a read transition destination page in line next to a final line of a work file for generation. A process 1213 overwrites the work file as a page set to transition destination page name 1102 of the i-th record of a transition rule table 1101 of the work file for generation. A process 1214 determines whether or not a value of a control variable i is a final record of the transition rule table 1101. If a control variable indicates a final value, the present flow is terminated, and if not a final record, the processing proceeds to the process 1102. FIG. 13 shows a page transition check template 117. The page transition check template 117 is composed of a page transition check function 1301 only. The page transition check template 117 is represented by a comments tag HTML statement of a page transition template 117. The comments tag described above is a character string represented by a character string which is encircled by a character string "<!" obtained by connecting a character that signifies "smaller than" and the exclamation mark, and a character string ">!" obtained by connecting a character which signifies "larger than" and the exclamation mark. In the comment tag described on the page transition check template, in order to discriminate it from comments tag HTML statement, a character "@" is added to a function leading character and a character "%" to the final character of the replacement character string. The page transition check function 1301 includes an argument of a page name 1303 to be checked with respect to its page transition, and an argument of a list 1304 of a transition originating page name which can effect a transition to the aforementioned page.

FIG. 14 shows a page 1401 generated by the page transition defining system embodying the present invention. A frame encircled by the dotted line 1402 is a statement lying that a page transition can be effected only from the fixed transition originating page. As explained above, a statement can be generated that determines a page from which a transition can be effected to a page of a WWW application constituted by plurality of pages.

Next, an example of a page transition executing system for interpreting and executing a page generated by the page transition defining system will be explained.

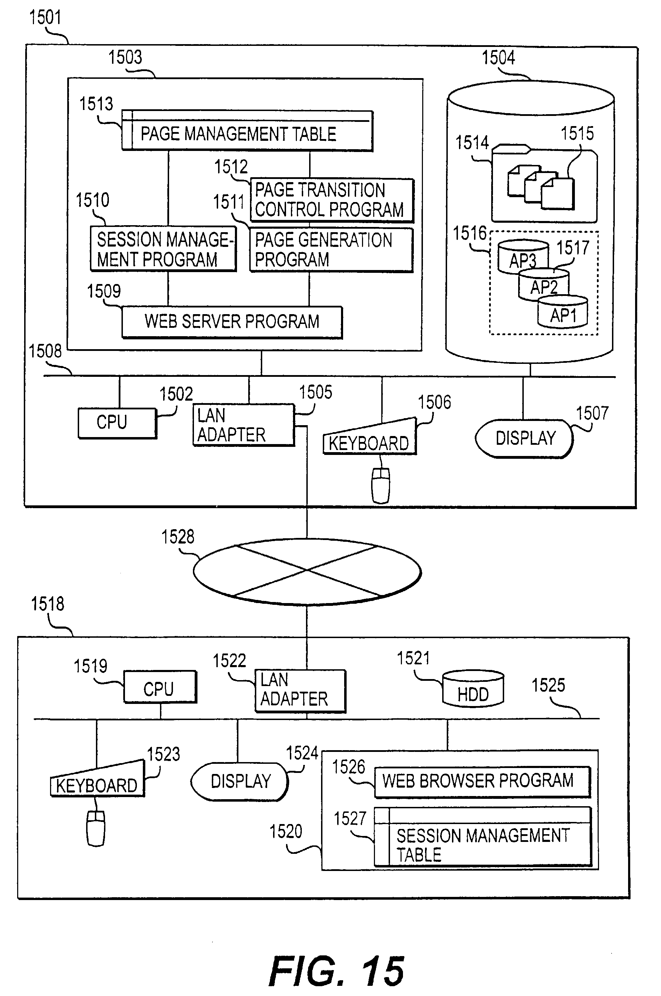

FIG. 15 shows an example of a functional block diagram of a page transition executing system embodying the present invention. A frame 1501 encircled by a solid line represents a server computer. The server computer is composed of a CPU1502 to interpret and execute a program, a memory 1503 to load a program, an external storage unit 1504 to store a program and/or data, a LAN adapter 1505 for connecting to a network, a keyboard 1506 for inputting data, and a display 1507 for outputting data, and further the CPU1502, the memory 1503, the external storage unit 1504, the LAN adapter 1505, the keyboard 1506, and the display 1507 are connected by a bus 1508 to transmit/receive data each other. In the memory 1503, a page transition executing system embodying the present invention is loaded. The page transition executing system comprises a WWW server program 1509, a session management program 1510 for managing a session with a WWW browser program 1526, a page generating program 1511 for dynamically generating a page in response to a request by a WWW server program 1509, a page transition control program 1512 for determining whether or not transition can be effected to a requested page in generating a page, and a page management program 1513 for managing a current page transmitted to the WWW browser program 1526 for each session. In the external storage unit 1504, a page 1515 generated by the page transition defining system is stored in a directory 1514. Further, a plurality of server applications 1517 executed from a page is stored in a directory 1516. A frame 1518 encircled by a solid line represents a client computer. The client computer comprises a CPU1519 for interpreting and executing a program, a memory 1520 for loading a program, an external storage unit 1521 for storing a program and/or data, a LAN adopter 1522 for connecting to a communication network, a keyboard 1523 for inputting data, and a display 1524 for outputting data, and further CPU1519, and a memory 1520, an external storage unit 1521, a LAN adapter 1522, a keyboard 1523, and a display 1524 are connected by a bus 1508 for transmitting/receiving data each other. A WWW browser program 1526 for driving the page transition executing system embodying the present invention and a session management table 1527 for establishing a session between the page transition executing system are loaded in the memory 1520.

The server computer 1501 and the client computer 1519 communicate with each other over a communication network 1428.

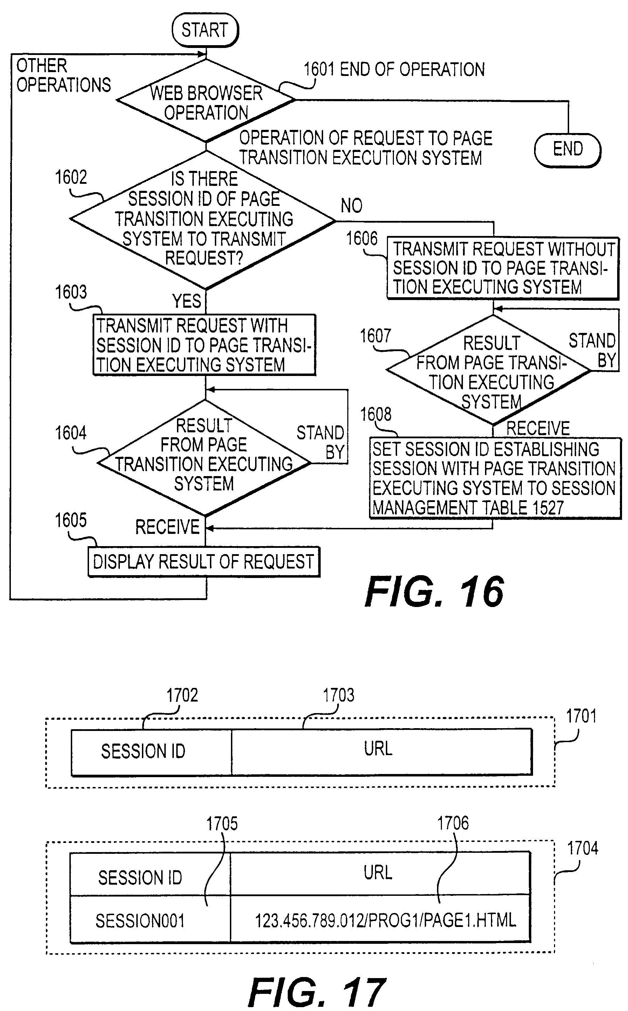

FIG. 16 is a flowchart of the WWW browser program 1526 of the client computer. A process 1601 determines an operation of the WWW browser. When a request is sent to a page transition executing system, the processing proceeds to a process 1602, while when sent to other operations, the processing proceeds to a process 1606. When a termination process is requested, the present flow is terminated, followed by terminating the WWW browser program. The process 1602 determines whether or not a session with a page transition executing system which transmits a request was established by referencing to the session management table 1527. When a session ID has been established to transmit the request to the session management table 1527, the processing proceeds to a process 1603, while when the session ID is set, the processing proceeds to a process 1606. The process 1603 transmits a request with a session ID to the page transmission executing system. A process 1604 waits for a result to come from the page transition executing system. When receiving a request result, the processing proceeds to a process 1605, while still in a receive-wait state, the request result is continued to be received. The process 1605 displays the result of the page transition executing system to the WWW browser 1526, the processing returning to the process 1601. A process 1606 transmits a request without a session ID to the page transition executing system. A process 1607 transmits a request without a session ID to the page transition executing system. When the process 1607 receives a request result, the processing proceeds to a process 1608, while when still in a receive-wait state, the process 1608 remains waiting for a request result. A process 1608 pairs a session ID for establishing a session with the page transition executing system and a URL of a server computer which is executing the page transition executing system, and sets it to the session management table 1527.

FIG. 17 shows a record format of the session management table 1527. A record 1701 of the session management table 1527 comprises a session ID1702 and a URL1703. To the session ID1702, a session ID is set for establishing a session with the page transition executing system. The URL1703 sets an IP address of a server computer in which the page transition executing program is being executed. Next, a case where specific data is set to the session management table 1527 will be described. In the session management table 1527, data is set to one record. A session ID "sesion001" is set to a session ID of the record 1705, and "123.456.789.012/prog1/page1.html" is set to the URL1706.

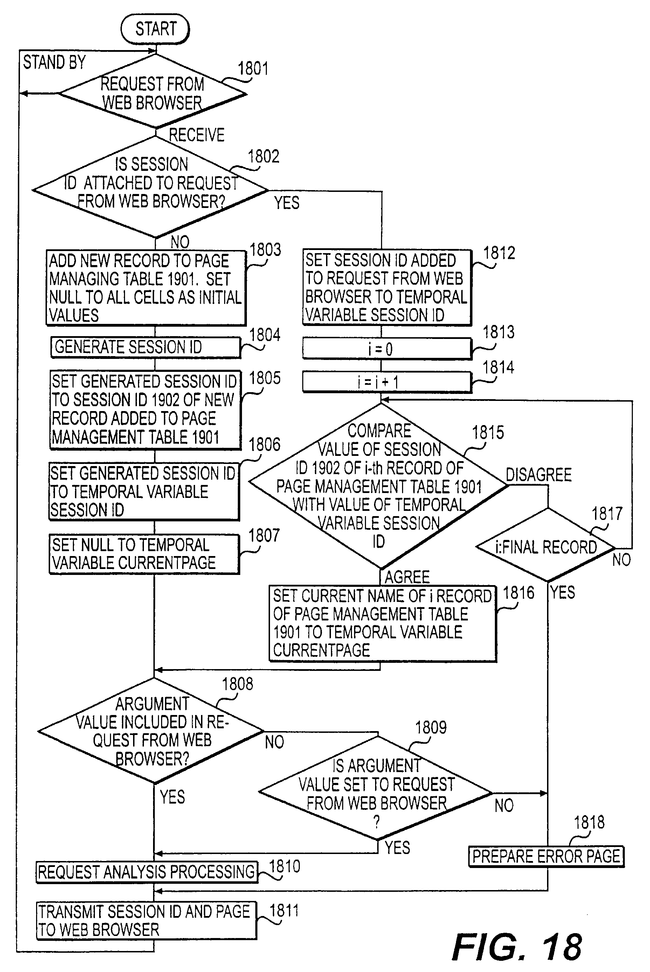

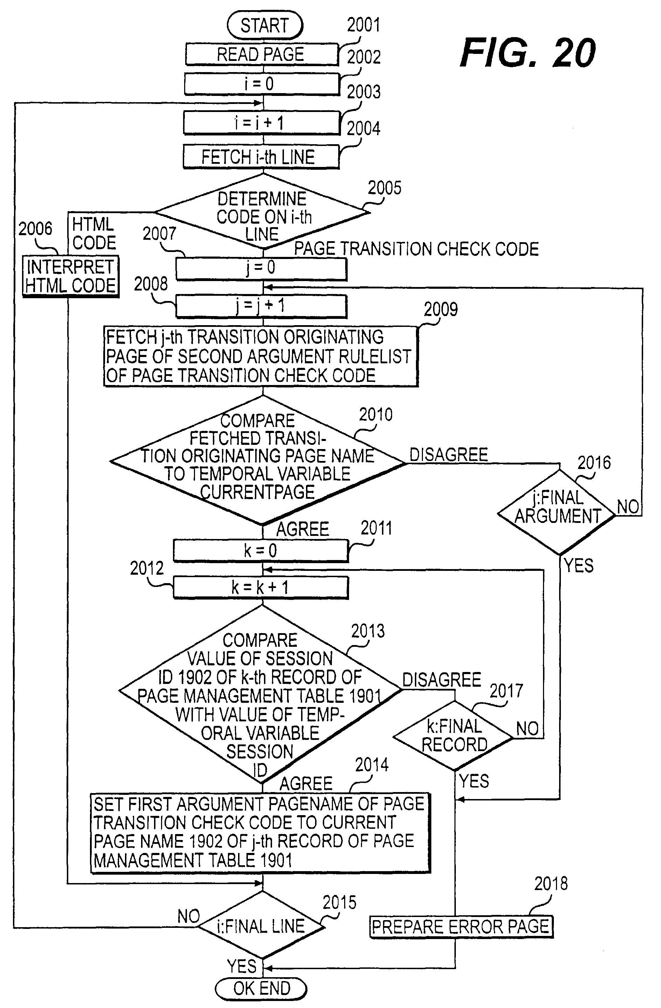

FIG. 18 is a flowchart of the page transition executing system of the server computer. A process 1801 waits for a request to come from a WWW browser. When a request from the WWW browser is received, the processing proceeds to a process 1802, while when not received, the processing continues to wait for a request to come from the WWW browser. A process 1802 determines whether or not a session ID is added to a request from the WWW browser. The aforementioned session ID is a key for uniquely determining connection between the WWW browser and the present page transition executing system. When the session ID is attached to the request, the processing proceeds to a process 1812, while when not, the processing proceeds to the process 1803. The process 1803 adds a new record to the page management table 1527, and initializes all initial values by null. The process 1804 generates a session ID. The ID to be generated is a unique numeral or a character string by which the present page transition executing system is related to a WWW browser. According to the present invention, a format for the session ID is not particularly defined. A process 1805 sets a session ID generated in the session ID1902 of a new record added to the page management table 1801. A process 1806 sets the generated session ID as a temporal variable session ID. A process 1807 sets NULL to a temporal variable current Page. A process 1808 determines whether or not there is an argument in the request from the WWW browser. When an argument is attached, the processing proceeds to the process 1809, while when not attached, the processing proceeds to a process 1818. A process 1809 determines whether or not a value is set to the argument. When a value is set, the processing proceeds to a process 1810, while when not set, the processing proceeds to a process 1818. The process 18 analyzes and processes the request transmitted from the WWW browser. For the details, explanation is carried out with reference to FIG. 20. The process 1811 transmits the page analyzed and processed in the process 1810 to the WWW browser, and the processing proceeds to the process 1801. The process 1812 sets an session ID attached to the request from the WWW browser to a temporal variable session ID. The process 1813 initializes a control variable i by 0. A value of control variable i represents the number of records of the page management table 1901. A process 1814 adds one [1] to the control variable i. A process 1815 compares a value of a session ID1902 of the i-th record of the page management table 1901 to a value of the temporal variable session ID. When both values match each other, the processing proceeds to a process 1816, while when they don't match, the processing proceeds to a process 1817. The process 1816 sets a current page 1903 of i record of the page management table 1901 to the temporary variable current Page. The process 1817 determines whether or not a value of a control variable i indicates a final record of the page management table 1901. When the final page, the processing proceeds to a process 1818, while when not the final page, the processing proceeds to the process 1815. The process 1818 generates a transition error page indicating that a transition cannot be effected.

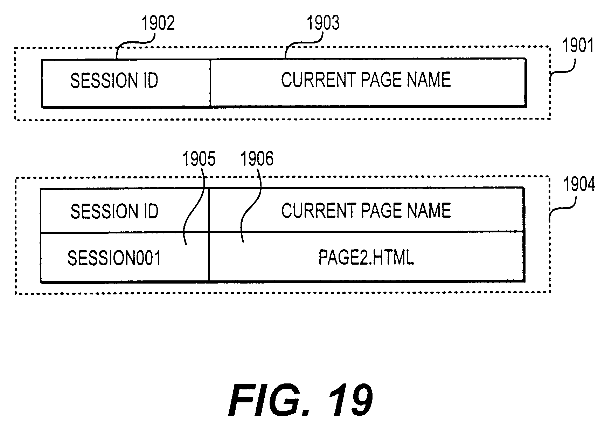

FIG. 19 shows a record format of the page management table 1513. The record 1901 of the page management table 1513 is composed of a session ID1902 and a current page name 1903. The session ID generated by the page transition executing system is set to the session ID1902. A file name of a page required by the currently requested by the WWW browser is set to the current page name 1903. Next, an example in which specific data is set to the page management table 1513 will be explained. The page management table 1513 has one record to which data is set. A session ID "session001" is set to the session ID1905 of the record 1904, and "page2.html" is set to the current page name 1906.

FIG. 20 is a detailed flowchart of the process 1808 shown in FIG. 18 for analyzing and processing a request transmitted from the WWW browser. A process 2001 reads a page specified by the WWW browser. A process 2002 initializes a control variable i by zero [0]. A process 2003 adds 1 to a control variable. A process 2004 reads an i-th line. A process 2005 determines a statement in the i-th read line. When an HTML statement, the processing proceeds to a process 2006, while a page transition check statement, the processing proceeds to a process 2007. The processing 2006 interprets an HTML statement. The processing 2007 initialize a control variable j by zero [0]. A value of a control variable j represents a second argument Rule List of an order of the page transition check statement. A process 2008 adds one [1] to the control variable j. A process 2009 fetches the j-th transition originating page of the argument Rulelist. A process 2010 compares a fetched transition originating page name to a temporary variable currentPage. When the fetched transition originating page name matches a temporary variable currentPage, the processing proceeds to a process 2011, while when it doesn't match, the processing proceeds to a process 2016. A process 2011 initializes a control variable k by zero [0]. A value of the control variable k represents the number of record of the page management table 1901. A process 2012 adds one [1] to the control variable. A process 2013 compares a value of the session ID1902 of the k-th record of the page management table 1901 to the temporal variable session ID. When the value of the session ID 1902 of the k-th record of the page management table 1901 matches the temporal variable session ID, the processing proceeds to a process 2014, when it doesn't match, the processing proceeds to a process 2017. The process 2014 sets the first argument PageName of the page transition check statement to a current page name 1902 of j-th record of the page management table 1901. A process 2015 determines whether or not a value of the control variable i indicates a final statement. When it is the final statement, the processing is terminated. While when it is not the final statement, the processing proceeds to a process 2003. The process 2016 determines whether or not a value of the control variable j indicates the final argument. When the final argument, the processing proceeds to the process 2018, while when not the final statement, the process proceeds to the process 2008. The process 2017 determines whether or not a value of the control variable k indicates a final argument. The process 2018 determines whether or not a value of the control variable j indicates the final record. When it is the final record, the processing proceeds to a process 2018, while when the final page, the processing proceeds to a process 2012.

As described above, when executing the WWW application, even if the page contents storing function or the page storage location storing function is used, the page transition that a user does not intend can be avoided.

According to the present invention, a statement which determines a page to which a transition can be effected can be created in a page of a WWW application composed of a plurality of pages. Additionally, when a WWW application is being executed, even if the page contents storing function or a page storage location storing function is used, a page transition that a user does not intend can be avoided.

### EMBODIMENT 2

The page transition system relating to the embodiment 2 will hereafter be described, in which the page transition rule to indicate a transition source page that is permitted to transit to a specific transition destination page and a user access authority level required for the page transition is outputted to a transition rule file, and transitions to a plurality of pages having a rule of order are executed in accordance with this page transition rule.

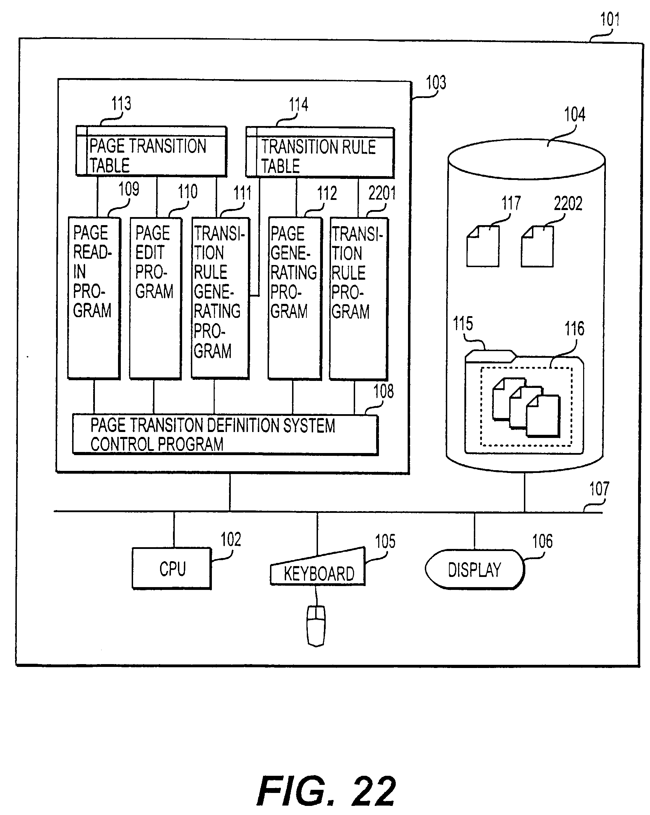

Fig. 22 illustrates one example of a functional construction relating to the page transition definition system to collectively control the page transition rule by the rule file. An area 101 surrounded by a solid line illustrates a computer that executes the page transition definition system. The foregoing computer includes a CPU 102 to execute and interpret the program, a memory 103 in which the program is loaded, an external storage unit 104 in which the program and data are stored, an input device 105 to input data, a display unit 106 to display the calculation result of the CPU 102, and a bus 107 that connects data handled by the CPU 102, memory 103, external storage unit 104, keyboard 105, and display unit 106. The external storage unit 104 stores an object page 116 as an input/output file of the page transition destination system in a directory 115, a transition rule file 2202 as an output file, a page transition source check template statement 117 to judge whether a transition source page can be transited to a transition destination page during execution of the WWW application. In the memory 103 are loaded programs to cause the foregoing computer to function as the page transition definition system. The programs include a page transition definition system control program 108 to control the page transition definition system, a page read-in program 109 that reads in the whole object pages 116 of the WWW application from the directory 115 specified by a user, extracts the transition destination pages transiting from the transition source pages, sets the transition source pages and all the extracted transition destination pages in a pair on a page transition table 113, and displays transition states between pages from the page transition table 113 on the display 106 by using graphics, a page edit program 110 that sets the transition destination pages of arbitrary pages on the transition destination pages specified by a user, and sets the pages set on the transition destination pages on the page transition table 113, a transition rule generating program 111 that extracts transition source pages transiting to a certain page from the page transition table 113, and sets the foregoing destination pages and all the extracted transition source pages in a pair to a transition rule table 114, a page generating program 112 that sets the transition source pages to be able to transit to a certain page to the transition source check template statement 117 from the transition rule table 114, and adds the transition source check template statement 117 thus set to the transition destination page, and a transition rule program 2201 that outputs a page transition rule from the transition rule table 114, whereby the computer collectively controls the page transition.

Further, the foregoing program to make the computer 101 function as a page transition definition device to define transitions between a plurality of pages is recorded in a recording medium such as a CD-ROM or the like, is stored in a storage unit such as a magnetic disk or the like, and is loaded into a memory to be executed. Also, the medium to record the foregoing program may be the other recording medium than the CD-ROM.

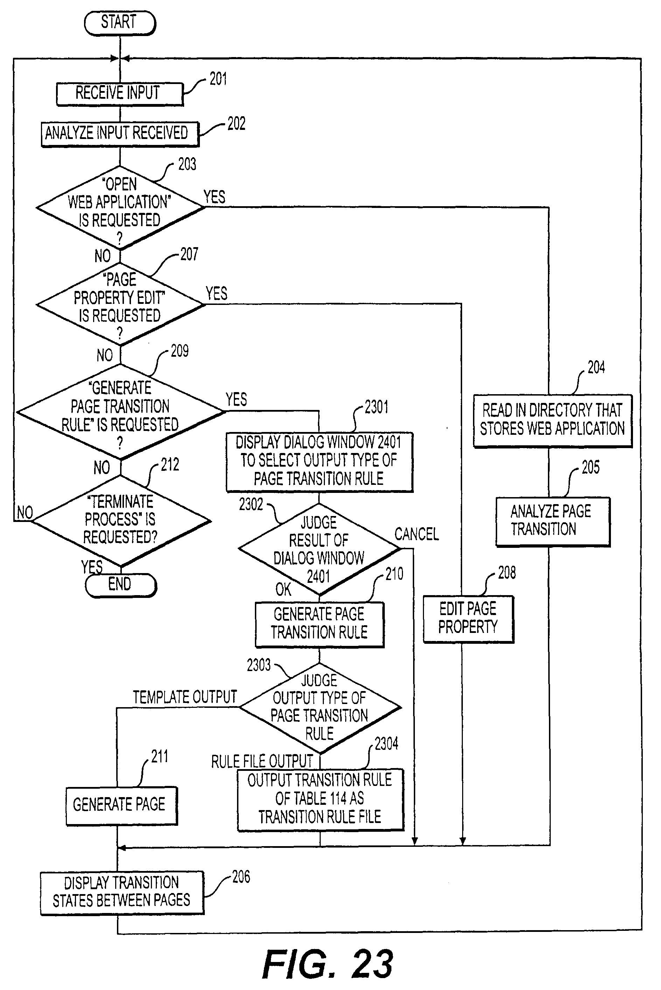

Fig. 23 illustrates a schematic processing flow of the page transition definition system. The process 201 receives an input to the page transition definition system that a user inputs through the keyboard 105. The process 202 analyzes the input received at the process 201. The process 203 judges whether or not the user's request is a process to open the WWW application. If it is the process to open the WWW application, the process advances to the process 204, and if it is not the process to open the WWW application, the process is shifted to the process 207. The process 204 reads in a directory that the user inputs through the keyboard 105. The foregoing directory is the directory 115 that stores the page of the WWW application. The process 205 reads in all the pages 116 stored in the directory 115, extracts a set of transition destination pages that can transit from each of the pages to all the pages, and sets the transition source pages and all the extracted transition destination pages in a pair on the page transition table 113. The process 206 reads out the transition states between pages from the page transition table 113 to display by graphics on the display 106.

The process 207 judges whether or not the user's request is a page property edit process from the analysis of the process 202. If it is the page property edit process, the process advances to the process 208, if it is not the page property edit process, the process is shifted to the process 209. The process 208 sets a transition destination of an arbitrary page on the transition destination page that the user specifies, and sets the page set on the transition destination page on the page transition table 113.

The process 209 judges whether or not the user's request is a page transition rule generating process from the analysis of the process 202. If it is the page transition rule generating process, the process advances to the process 2301, and if it is not the page transition rule generating process, the process is shifted to the process 212. The process 2301 displays a dialog window for selecting to output the page transition rule to the template, or to output it to the file.

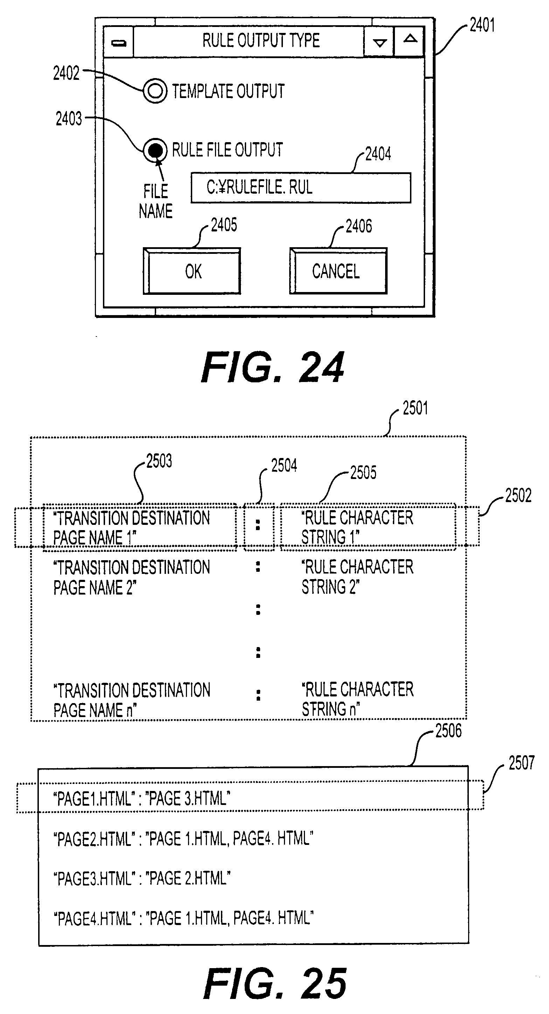

Fig. 24 illustrates the foregoing dialog window. The dialog window 2401 comprises a radio button 2402 and a radio button 2403 for selecting the template or the file as the output destination of the page transition rule, a file name input column 2404 for inputting the file name of the output destination, when the file is selected as the output destination of the page transition rule, and an OK button 2405 and a cancel button 2406 for determining the process of the dialog window 2401. If the user desires to output the page transition rule to the template, the user checks the radio button 2402, and if the user desires to output the page transition rule to the file, the user checks the radio button 2403, and inputs the file name of the page transition rule in the file name input column 2404. The process 2302 judges the process result of the dialog window 2401. If the OK button 2405 is selected, the process advances to the process 210, and if the cancel button 2406 is pressed, the process is shifted to the process 206. The process 210 extracts a set of pages that can transit to a certain page from the page transition table 113, and sets the transition destination pages and all the extracted transition source pages in a pair on the transition rule table 114. The process 2303 judges the output type of the page transition rule. If the radio button 2402 is checked, the process advances to the process 211, and if the radio button 2403 is checked, the process is shifted to the process 2304. The process 211 sets the transition source pages that can transit to a certain page from the transition rule table 114 in the transition source check template statement 117, and adds the set transition source check template statement 117 to the transition destination page. The process 2304 generates the transition rule file 2202 from the transition rule table 114. The process 212 judges whether or not the user's request is to terminate the process from the analysis of the process 202. If it is to terminate the process, the process ends this processing flow, and ends the page transition definition system. If it is not to terminate the process, the process returns to the process 201.

Next, the process 2304 in which the transition rule file 2202 is generated from the transition rule table 114 will be described with reference to the drawings.

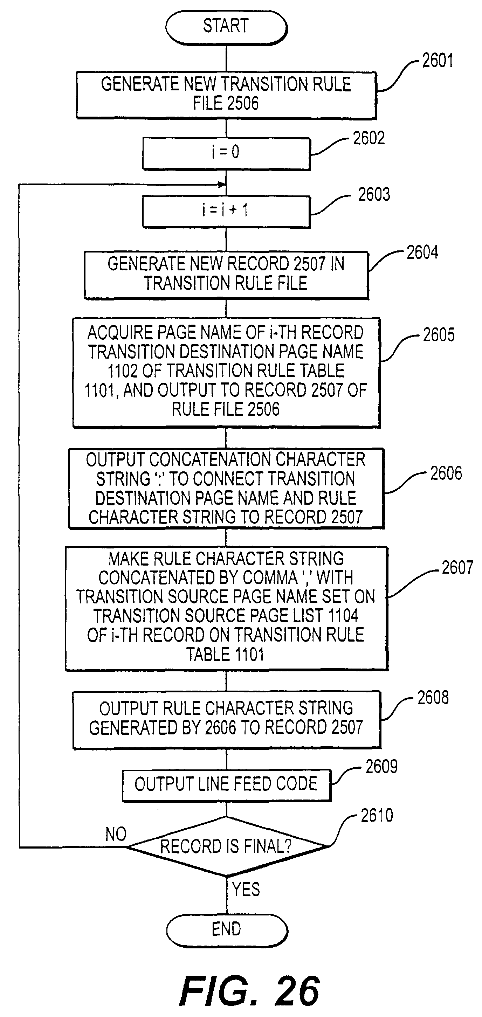

Fig. 25 illustrates one example of the transition rule file 2202 relating to this embodiment. A transition rule file format 2501 of the transition rule file 2202 consists of a record format 2502 including a plurality of records. The record format 2502 includes a transition destination page name 2503, concatenation character 2504, and rule character string 2505. In the transition destination page name 2503 are set the page names of the transition destinations. In the rule character string 2505 are set the page names of transition sources that can transit to the concerned transition destination pages. If the transition source includes a plurality of pages, the page names of transition sources are concatenated by the comma ','. The concatenation character 2504 is a delimiter to concatenate the transition page name 2503 with the rule character string 2505 by the colon ':'. One example of the transition rule file 2202 is illustrated in a transition rule file 2506. A processing flow to generate the transition rule file 2506 from a transition rule table 1101 will be detailed with reference to Fig. 26.

Fig. 26 is a flowchart to illustrate the processing procedure to generate the transition rule file 2506. The process 2601 uses a character string inputted in the file name input column 2404 as a file name to thereby generate a new transition rule file 2506. The process 2602 initializes the control variable i by 0. The value of the control variable i represents the record number of the transition rule table 1101. The process 2603 adds 1 to the control variable i. The process 2604 generates a new record 2507 in the transition rule file 2506. The process 2605 acquires the page name of the i-th record transition destination page name 1102 in the transition rule table 1101, and outputs to the record 2507 as the transition destination page name 2503. The process 2606 outputs the concatenation character 2504 ':' to connect the transition destination page name 2503 and the rule character string 2505 to the record 2507. The process 2607 makes a rule character string concatenated by the comma ',' with the transition source page name that is set to a transition source page list 1104 of the i-th record of the transition rule table 1101. The process 2608 outputs the rule character string 2505 generated by the process 2607 to the record 2507. The process 2609 outputs a line feed code. The process 2610 judges whether the record is final or not. If the i-th record is not the final record of the transition rule table 1101, the process returns to the process 2603. If the i-th record is the final record of the transition rule table 1101, this flow is ended.

According to the foregoing description, it becomes possible not only to pad the page transition rule of the WWW application comprised of a plurality of pages in each of the pages, but to control the rule collectively by one file.

One embodiment of the page transition definition system will be described, which thereby makes it possible to generate the transition rule file 2202 in which the user access authority level is set on each of the pages. This embodiment is to restrict the page transition in accordance with the access authority level of a user who intends to transit pages, even if the page transition is a proper one which is generated in the transition rule file 2202.

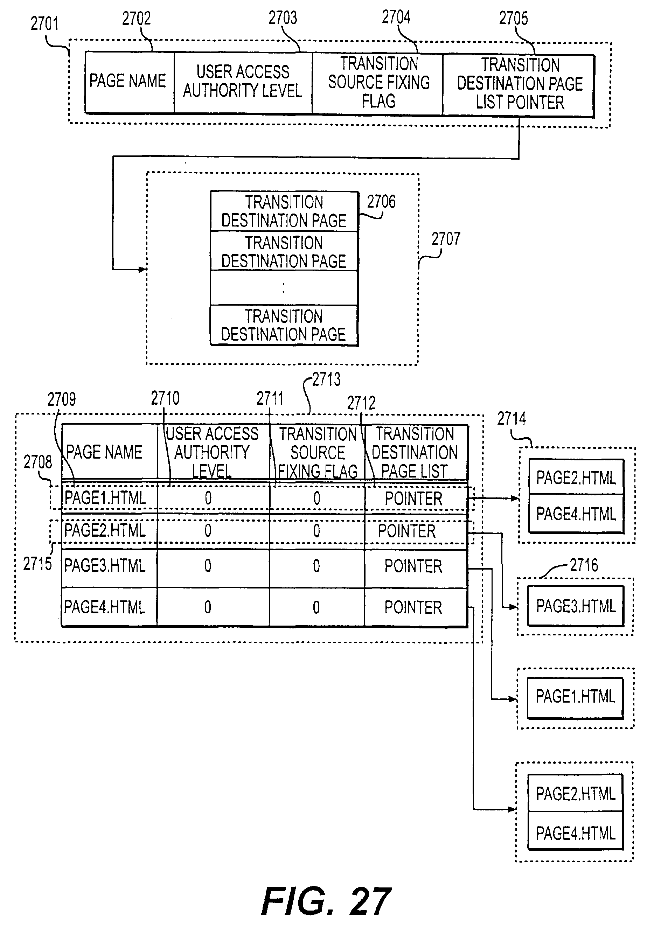

Fig. 27 illustrates the record format of the page transition table 113, in which the user access authority level is set on each of the pages. A page transition table record 2701 comprises a page name 2702, user access authority level 2703, transition source fixing flag 2704, and transition destination page list pointer 2705. In the page name 2702 is set a file name of the page. In the user access authority level 2703 is set a user access authority level, whereby the user is allowed to transit a page to the page set in the page name 2702. Only the user who holds the access authority level equal to or higher than the level set in the user access authority level 2703 is qualified to transit the page. In the transition source fixing flag 2704 is set 0 or 1. If 0 is set, it means that the transition to the page set in the page name 2702 is allowed even from other than the transition source page, and the value set in the user access authority level 2703 is made invalid. If 1 is set, it means that the transition to the page set in the page name 2702 is not allowed from other than the transition source page that the user explicitly designates by the page transition definition editor. In the transition destination page list pointer 2705 is set a pointer to a transition destination page list 2707

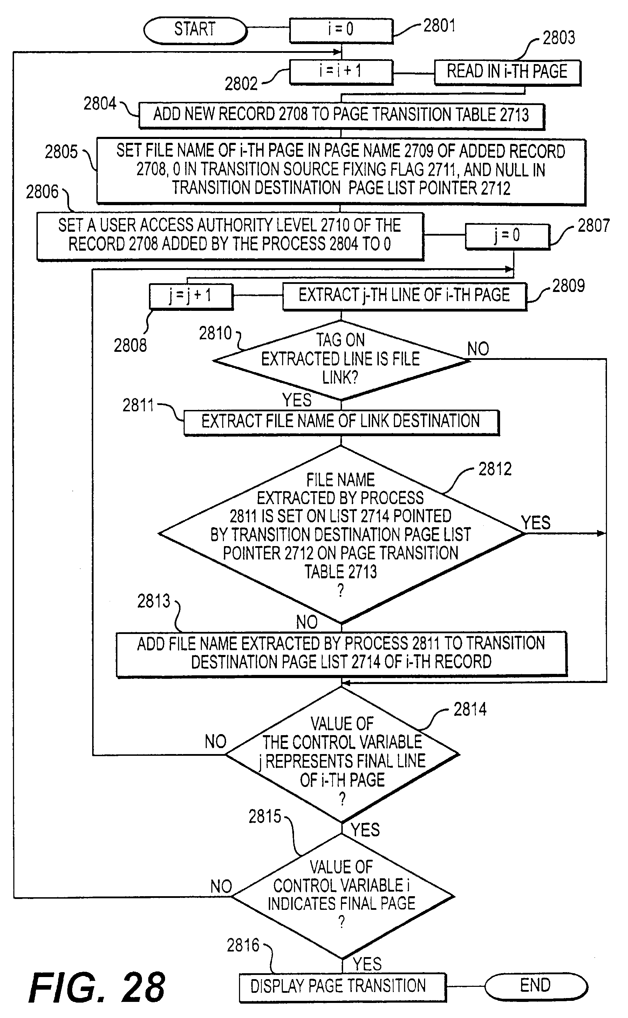

Next, Fig. 28 illustrates the processing flow to set the user access authority levels on a page transition table 2713 for each of the pages. The process 2801 initializes the control variable i by 0. The value of the control variable i indicates the page number of the WWW application that the process 204 has read in. The process 2802 adds 1 to the control variable i. The process 2803 reads in the i-th page of the pages of the WWW application read in by the process 204. The process 2804 adds a new record 2708 to the page transition table 2713. The process 2805 sets the file name of the i-th page in a page name 2709 of the record 2708 added by the process 2804, 0 in a transition source fixing flag 2711, and NULL in a transition destination page list pointer 2712. The process 2806 sets a user access authority level 2710 of the record 2708 added by the process 2804 to 0. The process 2807 initializes the control variable j by 0. The value of the control variable j represents the line number of a statement described on the i-th page read in by the process 2803. The process 2808 adds 1 to the control variable j. The process 2809 extracts the j-th line of the i-th page. The process 2810 judges whether the tag described on the extracted line is a file link or not. If the tag is a file link, the process advances to the process 2811, and if it is other than a file link, the process is shifted to the process 2814. The process 2811 extracts the file name of a link destination. The process 2812 judges whether or not the file name extracted by the process 2811 is already set on a transition destination page list 2714 which is pointed by the transition destination page list pointer 2712 of the records of the page transition table 2713 added by the process 2804. If the foregoing file name is set, the process jumps to the process 2814, and if not, the process advances to the process 2813.

The process 2813 adds the file name extracted by the process 2811 to the transition destination page list 2714 of the i-th record added by the process 2804. The process 2814 judges whether or not the value of the control variable j represents the final line of the i-th page. If the value of the control variable j represents the final line, the process advances to the process 2815, and if it does not, the process returns to the process 2808. The process 2815 judges whether or not the value of the control variable i indicates the final page of the WWW application stored in the directory 115. If the value of the control variable i indicates the final page, the process advances to the process 2816, and if it does not, the process returns to the process 2802. The process 2816 displays the page transition of the WWW application from the value set on the page transition table 2713, and ends this flow.

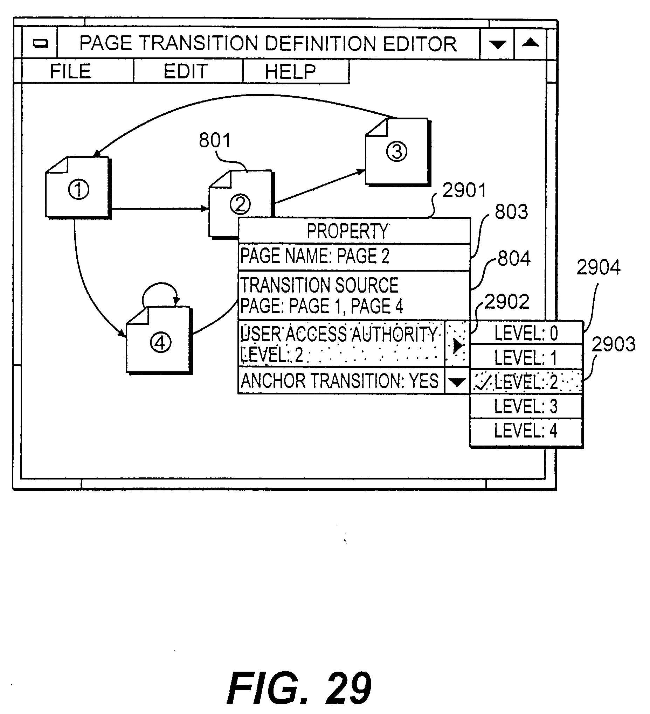

Next, one example of screen manipulation will be described with Fig. 29, whereby a user access authority level is set on an arbitrary page presented on the display 106. A page property menu 2901 contains, in addition to the page property menu 802, a menu to set user access authority levels. To click the page icon 801 by the right button of the mouse displays the page property menu 2901. The page property menu 2901 includes a page name text 803, transition source page name list 804, user access authority level setting list 2902, transition fixing setting combo-box 805. The page name text 803 is to display a file name of the page. The transition source page name list 804 is to display a file name of the page that can be transited to an object page. The user access authority level setting list 2902 is to display a user access authority level. The user access authority level can be set such that to click the user access authority level setting list 2902 using a mouse pointer 2903 displays a level list 2904, and to select an arbitrary level of the level list 2904 designates the level. The transition fixing setting combo-box 805 displays whether to limit the page that can be transited to an object page to only the page displayed on the transition source page name list 804. In the screen manipulation to set the user access authority level, the transition fixing is set to 'yes', in order to make the user access authority level effective.

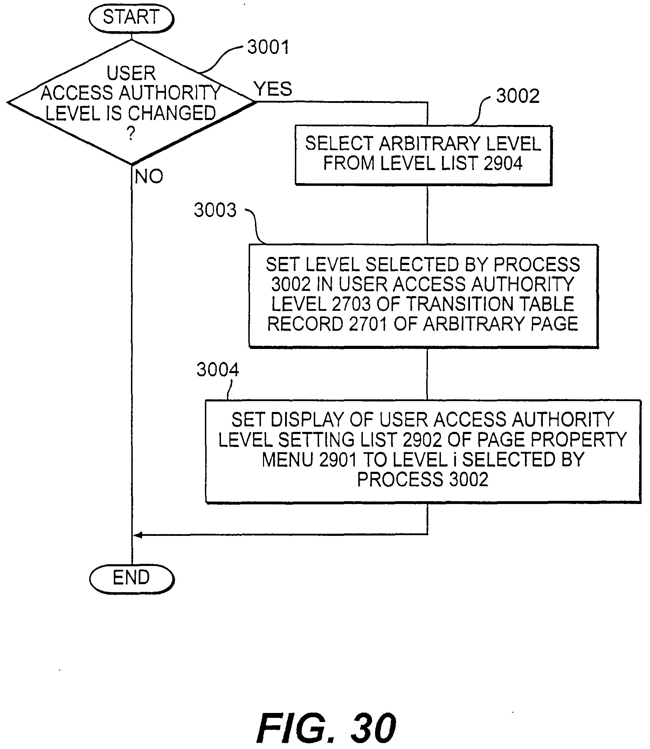

Next, Fig. 30 illustrates a processing flow of the screen manipulation in Fig. 29. The process 3001 judges the manipulation of the user access authority level setting list 2902. If the user access authority level is changed, the process advances to the process 3002, and if it is not changed, this flow is ended. The process 3002 selects an arbitrary level from the level list 2904. The process 3003 sets the level selected by the process 3002 in the user access authority level 2703 of the page transition table record 2701 of arbitrary pages. The process 3004 sets the display on the user access authority level setting list 2902 of the page property menu 2901 to the level selected by the process 3002, and this flow is ended.

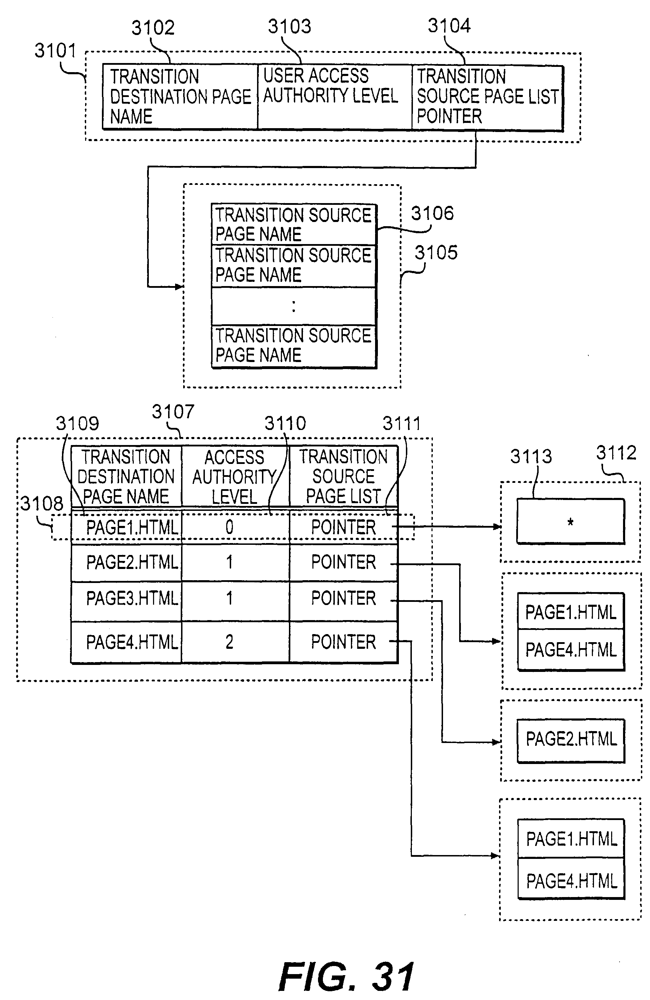

Fig. 31 illustrates the record format of the transition rule table 114, in which the user access authority level is set in each of the pages. A transition rule table record 3101 includes a transition destination page name 3102, user access authority level 3103, and transition source page list pointer 3104. In the transition destination page name 3102 is set a file name of a transition destination page. In the user access authority level 3103 is set the user access authority level of a transition destination. In the transition source page list pointer 3104 is set a pointer to a transition source page list 3105.

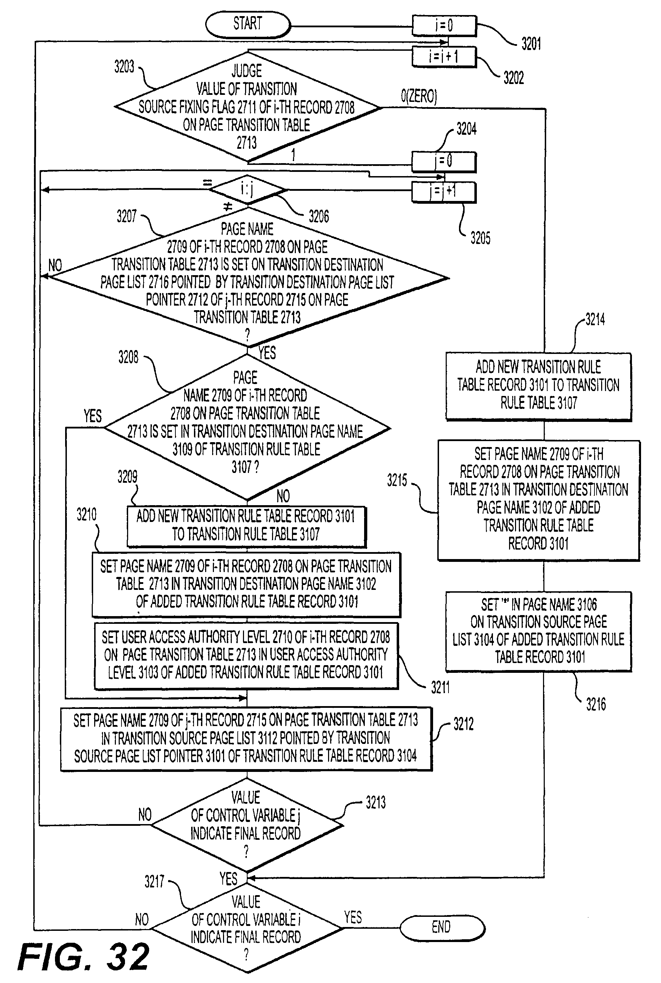

Next, a processing flow to set the user access authority level in each page on a transition rule table 3107 will be described with reference to Fig. 32. The process 3201 initialises the control variable i by 0. The value of the control variable i indicates the number of records on the page transition table 2713. The process 3202 adds 1 to the control variable i. The process 3203 judges the value of the transition source fixing flag 2711 of the i-th record 2708 on the page transition table 2713. If the value of the transition source fixing flag 2711 is '1', the process advances to the process 3204, if it is '0', the process is shifted to the process 3214.

The process 3204 initializes the control variable j by 0. The value of the control variable j indicates the number of records on the page transition table 2713, which are comparable to the records on the page transition table 2713 indicated by the control variable i. The process 3205 adds 1 to the control variable j. The process 3206 compares the value of the control variable i to that of the control variable j. If the value of the control variable j is equal to that of the control variable j, the process returns to the process 3205, if the values are different, the process advances to the process 3207. The process 3207 judges whether or not the page name 2709 of the i-th record 2708 on the page transition table 2713 is set on a transition destination page list 2716 pointed by the transition destination page list pointer 2712 of a j-th record 2715 on the page transition table 2713. If it is set, the process advances to the process 3208, and if not, the process returns to the process 3205. The process 3208 judges whether or not the page name 2709 of the i-th record 2708 on the page transition table 2713 is set in the transition destination page name 3109 on the transition rule table 3107. If it is set, the process jumps to the process 3212, and if not, the process advances to the process 3209. The process 3209 adds a new transition rule table record 3108 to the transition rule table 3107. The process 3210 sets the page name 2709 of the i-th record 2708 on the page transition table 2713 in the transition destination page name 3109 of the added transition rule table record 3108. The process 3211 sets the user access authority level 2710 of the i-th record 2708 on the page transition table 2713 in a user access authority level 3110 of the added transition rule table record 3108. The process 3212 sets the page name 2709 of the j-th record 2715 on the page transition table 2713 in a transition source page list 3112 pointed by a transition source page list pointer 3111 of the transition rule table record 3108. The process 3213 judges whether or not the value of the control variable i is that of the final record. If it is the value of the final record, the process goes to the process 3217, and if it is not, the process returns to the process 3205. The process 3214 shifted from the process 3203 adds the transition rule table record 3108 to the transition rule table 3107. The process 3215 sets the page name 2709 of the i-th record 2708 on the page transition table 2713 in the transition destination page name 3109 of the added transition rule table record 3108.

The process 3216 sets the symbol '*' that permits a transition from an arbitrary page in a transition source page name 3113 on the transition source page list 3112 of the added transition rule table record 3108, and advances the process to the process 3217. The process 3217 judges whether or not the value of the control variable i is that of the final record. If it is not the value of the final one, the process returns to the process 3202, and if it is, the process ends this flow. The transition rule table 3107 in Fig. 31 illustrates one example of the result of the foregoing flow.

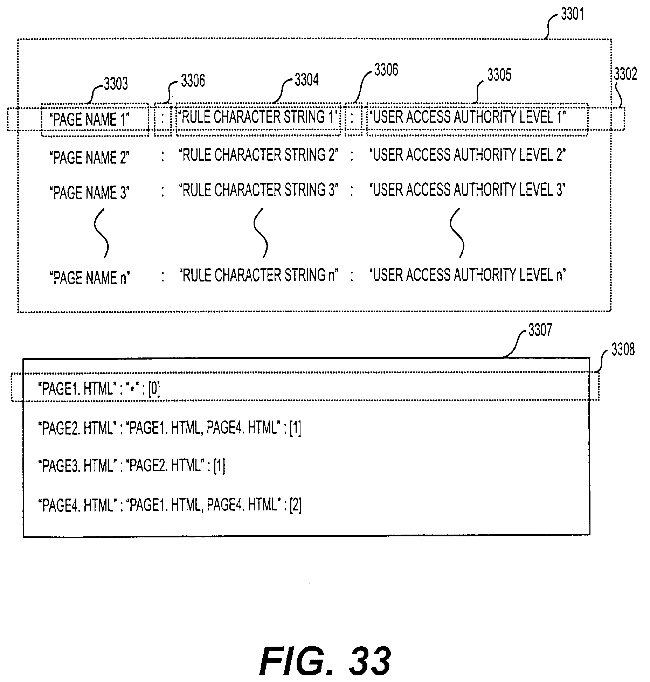

Fig. 33 illustrates one example of a file format of the transition rule file 2202 in which a user access authority level is set on each page. A transition rule file format 3301 is comprised of records of a plurality of record formats 3302. The record format 3302 contains a page name character string 3303, rule character string 3304, and user access authority level 3305. The page name character string 3303, rule character string 3304, and user access authority level 3305 are partitioned by the colon symbols ':' of concatenation character strings 3306. The page name character string 3303 and the rule character string 3304 each are the character strings enclosed by the double quotation symbol '"'. The user access authority level 3305 is the character string enclosed by the left parenthesis '[' and the right parenthesis ']'. One example of the transition rule file 2202 is illustrated in a transition rule file 3307. Further, the data having a structure such that the page transition rule to indicate the transition source page provided with a permission to transit to the foregoing transition destination page is outputted to the transition rule file 2202 are to be recorded in a recording medium such as the CD-ROM or the like, to be stored in a storage unit such as a magnetic disk or the like, and then to be loaded into a memory and processed. Further, the medium to record the foregoing data may be the other media than the CD-ROM.

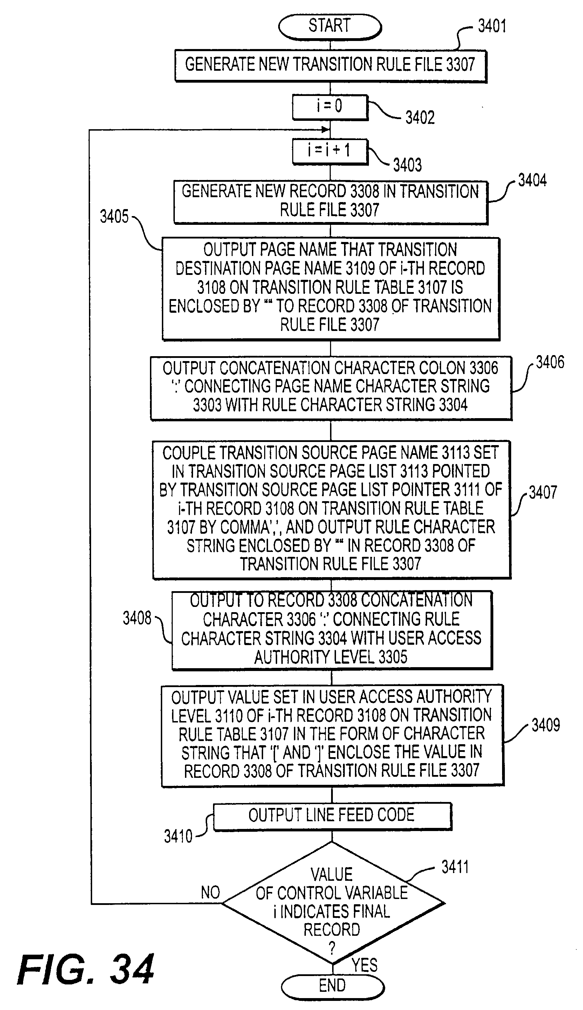

Next, a processing flow to output the transition rule file 3307 will be described with reference to Fig. 34. The process 3401 generates a new transition rule file 3307 serving the character string of the file name input column 2404 as a character string. The process 3402 initializes the control variable i by 0. The value of the control variable i indicates the number of the records on the transition rule table 3107. The process 3403 adds 1 to the control variable i. The process 3404 generates a record 3308 in the transition rule file 3307. The process 3405 outputs the page name that the transition destination page name 3109 of the i-th record 3108 on the transition rule table 3107 is enclosed by the double quotation symbols '"' to the record 3308 of the transition rule file 3307. The process 3406 outputs the concatenation character colon ':' to connect the page name character string 3303 with the rule character string 3304 to the record 3308.

The process 3407 couples the transition source page name 3113 set on the transition source page list 3112 pointed by the transition source page list pointer 3111 of the i-th record 3108 on the transition rule table 3107 by the comma ',', and outputs the rule character string enclosed by the double quotation symbol '"' into the record 3308 of the transition rule file 3307. The process 3408 outputs the concatenation character colon ':' to connect the rule character string 3304 with the user access authority level 3305 into the record 3308. The process 3409 outputs the value set in the user access authority level 3110 of the i-th record 3108 on the transition rule table 3107 in the form of a character string that the parentheses '[' and ']' enclose the value into the record 3308 of the transition rule file 3307. The process 3410 outputs a line feed code into the transition rule file 3307. The process 3411 judges whether or not the value of the control variable i is that of the final record. If it is not the value of the final record, the process returns to the process 3403. If it is, the process ends this flow. The transition rule file 3307 in Fig. 33 illustrates one example of the output. According to the foregoing description, it becomes possible to add access authority levels to arbitrary pages.

Next, one embodiment of the page transition execution system will be described, in which is added a function to interpret and execute the transition rule file 2202 generated by the page transition definition system.

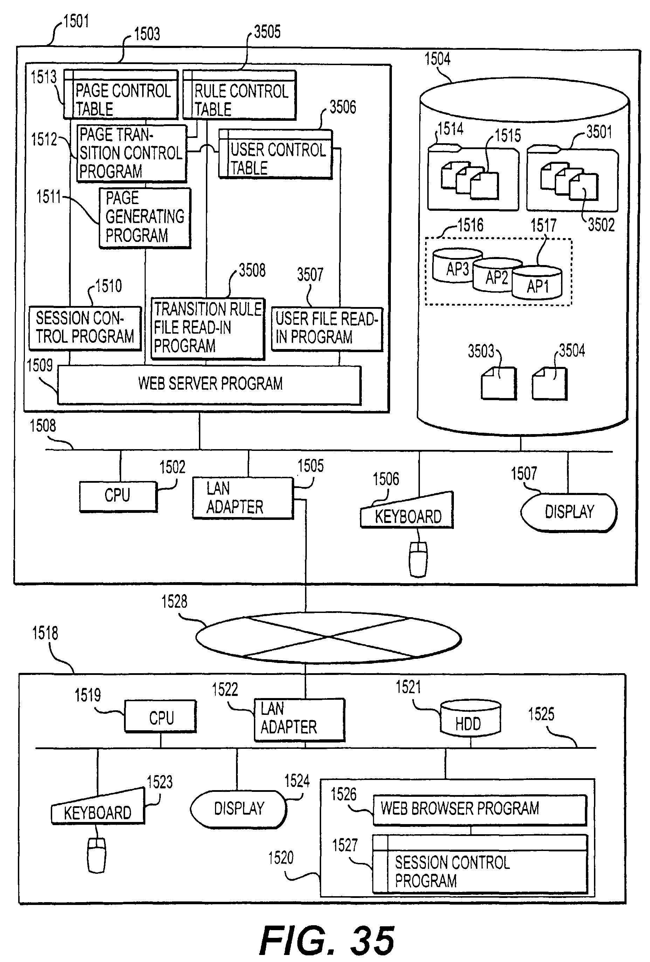

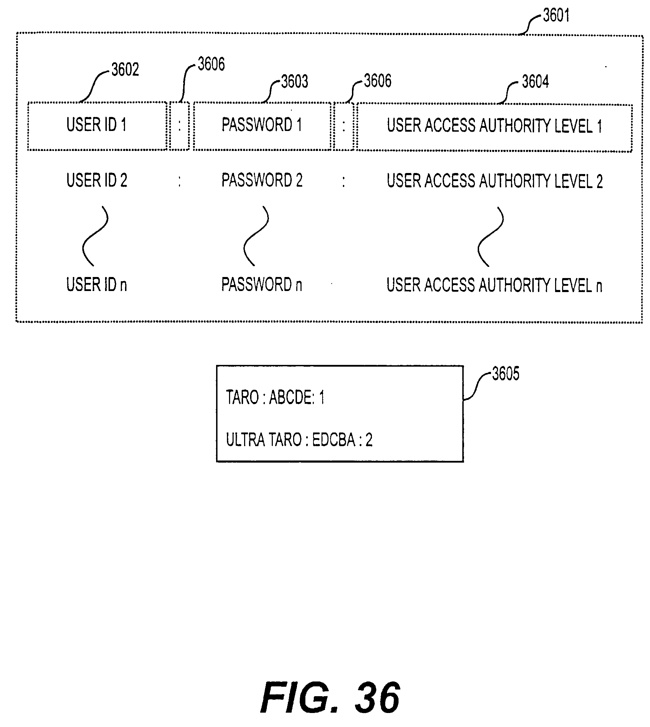

Fig. 35 newly adds, to the external storage unit 1504 of the page transition execution system having the functional construction in Fig. 15, a system page 3502, system page directory 3501 that stores the system page 3502, transition rule file 3503, and user file 3504; and to the memory 1503 of the page transition execution system having the functional construction in Fig. 15, it newly adds a rule control table 3505, user control table 3506, user file read-in program 3507, and rule file read-in program 3508. An area 1501 surrounded by a solid line illustrates a server computer. The server computer includes a CPU 1502 to execute and interpret the program, memory 1503 in which the program is loaded, external storage unit 1504 to store the program and data, LAN adapter 1505 for connecting the computer to the network, keyboard 1506 for inputting data, and display 1507 for presenting output data; and further, the CPU 1502, memory 1503, external storage unit 1504, LAN adapter 1505, keyboard 1506, and display 1507 are connected by a bus 1508 for mutually transmitting and receiving data. In the memory 1503 are loaded the program and data to cause the server computer to function as the page transition execution system to which the process to interpret and execute the transition rule file 3503 is added. The program and data comprises a WWW server program 1509, session control program 1510 to control sessions with a Web browser program 1526, page generating program 1511 to generate pages dynamically in response to the request from the WWW server program 1509, rule file read-in program 3508 to read in the transition rule file 3503 in which the rule to judge whether the transition to a requested page is possible when generating a page is stored from the external storage unit 1504, and to store it into the read-in rule control table 3505, user file read-in program 3507 to read in the user file 3504 in which the user information to judge whether or not the user access authority level is sufficient for the transition to a requested page when generating a page is stored from the external storage unit 1504, and to store it into the user control table 3506, page transition control program 1512 to judge whether the transition to a requested page is possible from the transition rule file 3503 and the user control table 3506 when generating a page, and page control table 1513 to control a current page transmitted to the Web browser program 1526 in each session. The user file will be described with Fig. 36.

The foregoing program to make the server computer function as the page transition execution device to execute the transition between a plurality of pages is to be recorded in a recording medium such as the CD-ROM or the like, to be stored in a storage unit such as a magnetic disk or the like, and then to be loaded into a memory and executed. Further, the medium to record the foregoing program may be the other media than the CD-ROM.

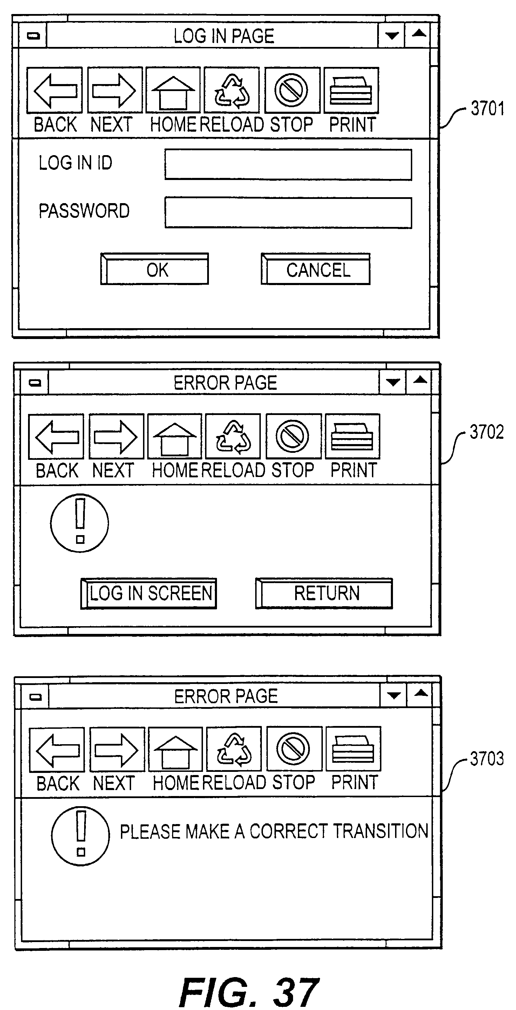

The external storage unit 1504 stores pages 1515 used for making the transition rule file 3503 by the page transition definition system of this embodiment into a directory 1514. Further, the external storage unit 1504 stores a plurality of server applications 1517 that are executed from the pages into a directory 1516. Further, the external storage unit 1504 stores system pages 3502 including log in pages for obtaining user access authority levels and error pages into a system page directory 3501. The system page will be described with Fig. 37.

An area 1518 surrounded by a solid line illustrates a client computer. The client computer comprises a CPU 1519 to execute and interpret the program, memory 1520 in which the program is loaded, external storage unit 1521 to store the program and data, LAN adapter 1522 for connecting the computer to the network, keyboard 1523 for inputting data, and display 1524 for presenting output data; and further, the CPU 1519, memory 1520, external storage unit 1521, LAN adapter 1522, keyboard 1523, and display 1524 are connected by a bus 1522 for mutually transmitting and receiving data. In the memory 1520 are loaded the Web browser program 1526 to execute processes between the client computer and the page transition execution system of this embodiment, and a session control table 1527 for determining sessions between the client computer and the page transition execution system. The server computer 1501 and the client computer 1518 communicates each other through a network 1528.

Fig. 36 illustrates one example of the user file 3504 of this embodiment. A user file format 3601 is a file containing a user ID 3602, password 3603, and user access authority level 3604. In the user ID 3602 is set a user ID. In the password 3603 is set a password of the foregoing user. In the user access authority level 3604 is set an access authority level of the user. The user ID 3602, password 3603, and user access authority level 3604 are connected by concatenation character strings 3606 colons ':'. One example of the user file 3504 is illustrated by a user file 3605.

Fig. 37 illustrates one example of the system page 3502 of this embodiment. The page transition execution system of this embodiment in which a function to interpret and execute the transition rule file 3503 generated by the page transition definition system is added is provided with three system pages 3502 including a log in page 3701, access authority insufficiency error page 3702, and transition impossibility error page 3703. The log in page 3701 is a page to obtain a user access authority level by inputting a user ID and a password. The access authority insufficiency error page 3702 is a page to be displayed when a transition is done with a user access authority level lower than the user access authority level set on an arbitrary page. The transition impossibility error page 3703 is a page to be displayed when a transition other than one described in the transition rule is done.

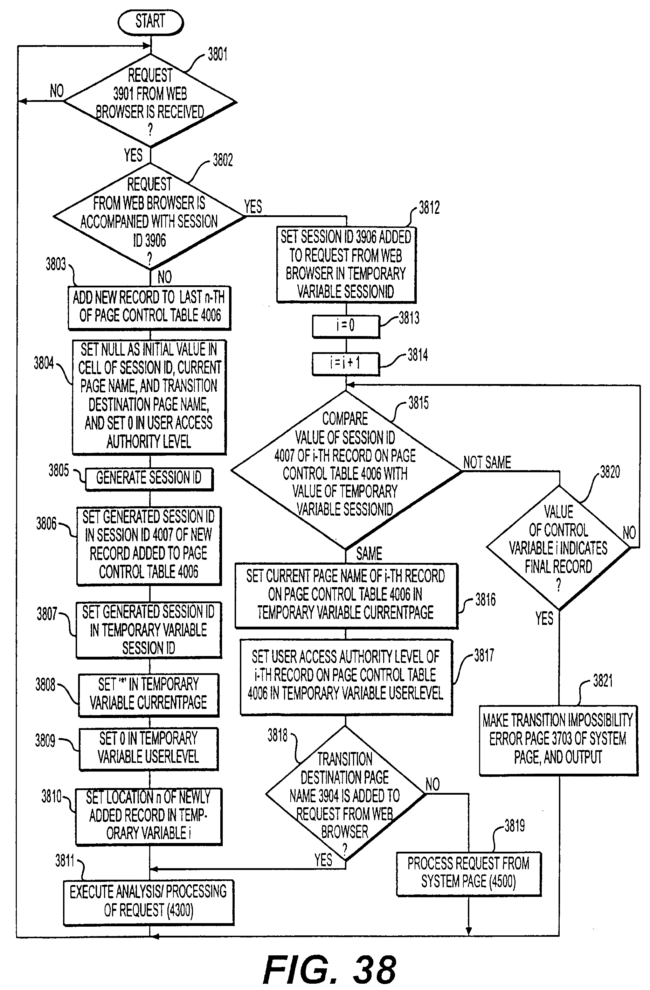

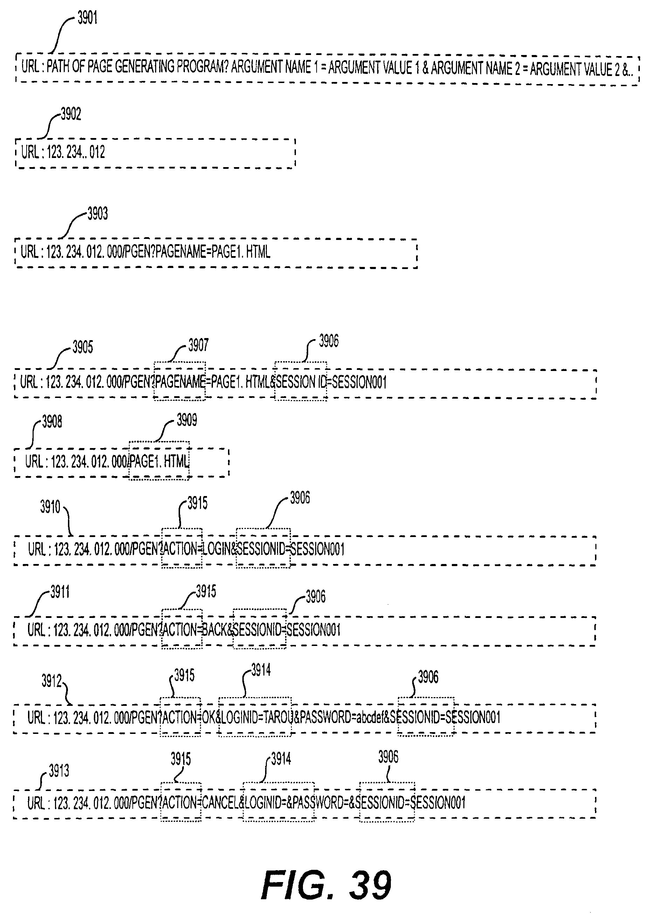

Fig. 38 illustrates a processing flow of the page transition execution system to interpret and execute the transition rule file 3503 generated by the page transition definition system. The process 3801 waits for a request from the WWW browser. If it receives the request from the WWW browser, the process is shifted to the process 3802. As long as it does not receive, the process continues to wait for the request from the WWW browser.
The process 3802 judges whether or not the request from the WWW browser accompanies a session ID 3906. The foregoing session ID is a key to associate the WWW browser uniquely with this page transition execution system. The information added to the request from the WWW browser will be described with Fig. 39.

If the request from the WWW browser accompanies the session ID 3906, the process regards it as the request from a user under an access, and the process is shifted to the process 3812; if the request does not accompany the session ID 3906, the process regards it as the request from a new user, the process is shifted to the process 3803. The process 3803 adds a new record to the last n-th of a page control table 4006. The process 3804 sets NULL as an initial value in the fields of a session ID 4007, current page name 4009, and transition destination page name 4010, and sets 0 in the field of the user access authority level 4008.
The process 3805 generates a new session ID. The session ID to be generated is a unique value or character string to associate this page transition execution system with the WWW browser. This embodiment does not confine the format of the session ID to a specific one.

The process 3806 sets the session ID generated by the process 3805 in the session ID 4007 of the new record that the process 3803 added to the page control table 4006. The process 3807 sets the session ID generated by the process 3805 in a temporary variable session ID. The process 3808 sets '*' in a temporary variable currentPage. The process 3809 sets 0 in a temporary variable userLevel.

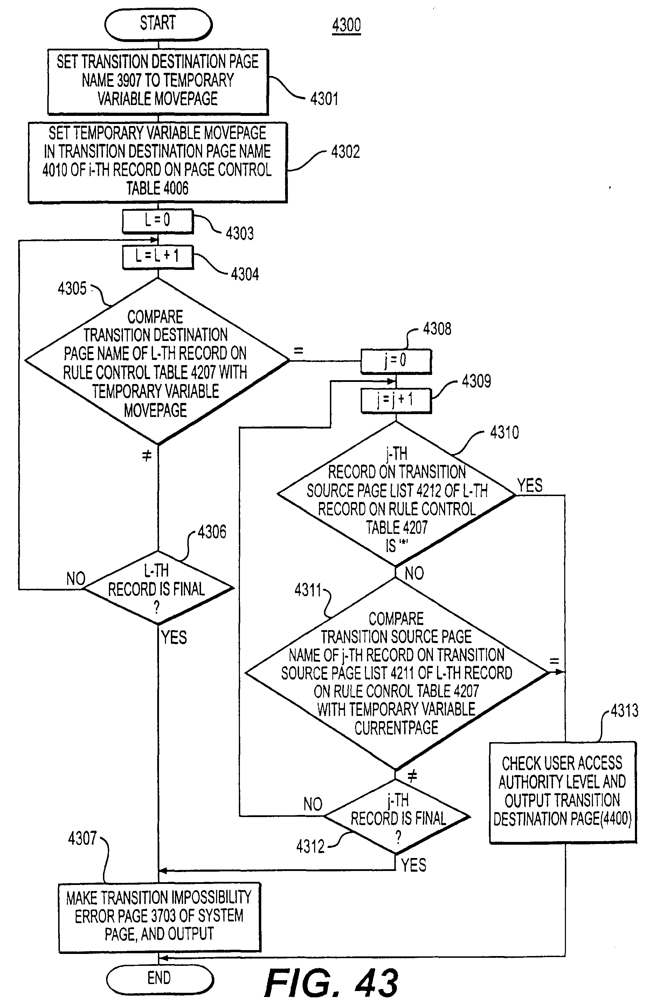

The process 3810 sets a location n of the new record added by the process 3803 in a temporary variable i. The value of the control variable i is the number of the records on the page control table 4006. The process 3811 executes the analysis and processing of a request. The processing flow thereof will be detailed with reference to the flow 4300 in Fig. 43. If the result of the analysis and processing at the process 3811 finds that the concerned page is a page specified by the transition source page, this page transition execution system transmits an instruction to stop the page content recording function to the WWW browser.

The process 3812 sets the session ID 3906 added to the request from the Web browser program 1526 in the temporary variable sessionID. The process 3813 initializes the control variable i by 0. The process 3814 adds 1 to the control variable i. The process 3815 compares the value of the session ID 4007 of the i-th record on the page control table 4006 with the value of the temporary variable sessionID. If the values are coincident, the process advances to the process 3816, and if they are not coincident, the process is shifted to the process 3820.

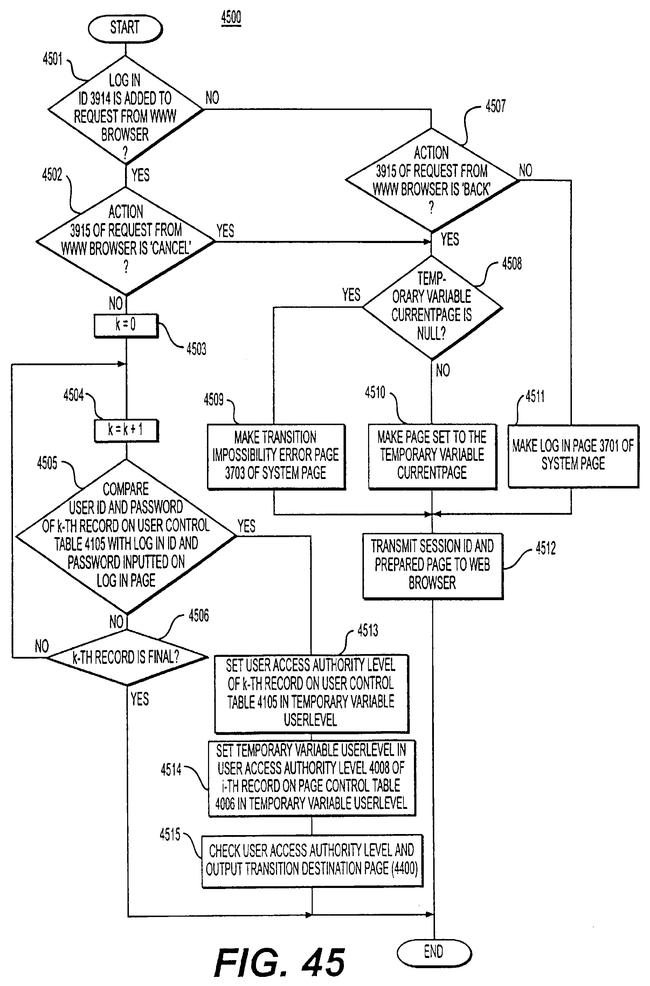

The process 3820 judges whether or not the value of the control variable i is that of the final record on the page control table 4006. If it is not that of the final record, the process returns to the process 3815, and if it is that of the final record, the process advances to the process 3821. The process 3821 makes the transition impossibility error page 3703 of the system page 3502, outputs it to the Web browser program 1526, and returns the process to the process 3801. The process 3816 sets the current page name 4009 of the i-th record on the page control table 4006 in the temporary variable currentPage. The process 3817 sets the user access authority level 4008 of the i-th record on the page control table 4006 in the temporary variable userLevel.
The process 3818 judges whether or not a page name 3907 of the transition destination is added to the request from the Web browser program 1526. If the page name is added, the process returns to the process 3811, and if not, the process advances to the process 3819. The process 3819 processes a request from the system page 3502. The flow will be detailed with the flow 4500 in Fig. 45.

Fig. 39 is a chart to illustrate one example of the URL requested from the WWW browser of this embodiment. A requested format 3901 is a URL comprised of the paths of the page generating program 1511 and a plurality of arguments. A link URL to a page set on an arbitrary page converts a link URL 3902 to the page into a unique page request URL 3903 so that the page generating program 1511 can process, and generates a page. A page request URL 3905 is an example of the URL that is requested from the WWW browser, when a page is transited to another page stored in the directory 1514. The page request URL 3905 is a URL comprised of the paths of the page generating program 1511, the session ID 3906, and the page name 3907 of the transition destination.

A page request URL 3908 is an example of the URL that is requested from the WWW browser, when a page is transited for the first time to another page stored in the directory 1514. As the transition destination page name, a page name 3909 is used instead of the transition destination page name 3907. A log in page request URL 3910 of the access authority insufficiency error page 3702 is an example of the URL that is requested from the WWW browser, when the 'log in screen' button in the access authority insufficiency error page 3702 is pressed. The log in page request URL 3910 is a URL comprised of the paths of the page generating program 1511, the session ID 3906, and an action information 3915 (ACTION = LOGIN).

A previous transition page request URL 3911 of the access authority insufficiency error page 3702 is an example of the URL that is requested from the WWW browser, when the 'return' button in the access authority insufficiency error page 3702 is pressed. The previous transition page request URL 3911 is a URL comprised of the paths of the page generating program 1511, the session ID 3906, and an action information 3915 (ACTION = BACK).

A user access authority level obtaining request URL 3912 of the log in page 3701 is an example of the URL that is requested from the WWW browser, when the 'OK' button in the log in page 3701 is pressed. The user access authority level obtaining request URL 3912 is a URL comprised of the paths of the page generating program 1511, the session ID 3906, an action information 3915 (ACTION = OK), a log in ID 3904, and a password. A previous transition page request URL 3913 of the log in page 3701 is an example of the URL that is requested from the WWW browser, when the 'CANCEL' button in the log in page 3701 is pressed. The previous transition page request URL 3913 of the log in page 3701 is a URL having paths of the page generating program 1511, the session ID 3906, and an action information 3915 (ACTION = CANCEL), the log in ID 3914, and a password.

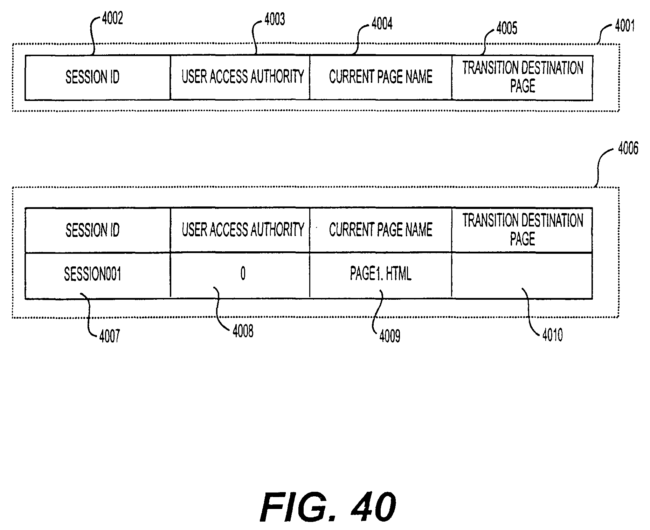

Fig. 40 illustrates one example of the page control table 1513 to which the user access authority level of this embodiment is added. A page control table record format 4001 is a record including fields of a session ID 4002, user access authority level 4003, current page name 4004, and transition destination page name 4005. In the session ID 4002 is stored a key to associate the WWW browser uniquely with this page transition execution system. In the user access authority level 4003 is stored a level to indicate the user access authority level that the WWW browser holds at the present moment. In the current page name 4004 is stored a page name that this page transition execution system has outputted to the WWW browser. In the transition destination page name 4005 is stored a page name of the transition destination requested from the WWW browser.

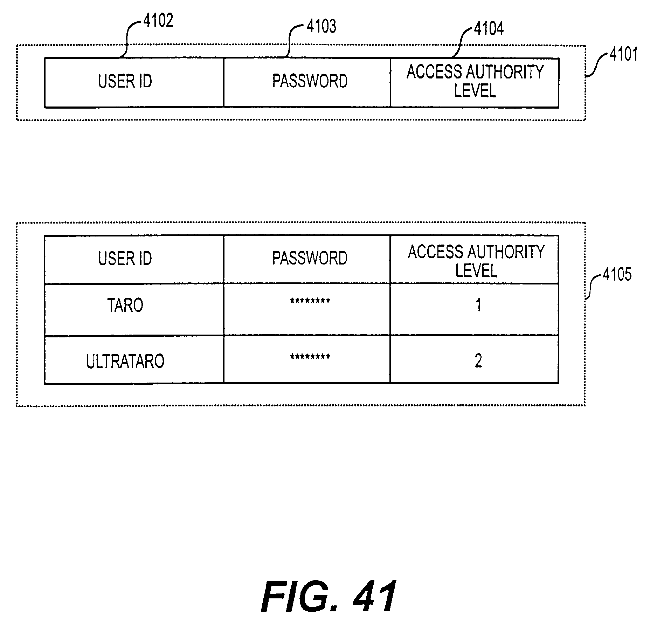

Fig. 41 is a chart to illustrate one example of the user control table 3506 of this embodiment. A user control table record format 4101 is a record containing a fields of a user ID 4102, password 4103, and user access authority level 4104. In the user ID 4102 is stored the user ID 3602 of the user file 3504. In the password 4103 is stored the password 3603 of the user file 3504. In the user access authority level 4104 is stored the user access authority level 3604 of the user file 3504. A user control table 4105 illustrates the user file 3504 read out thereon as an example.

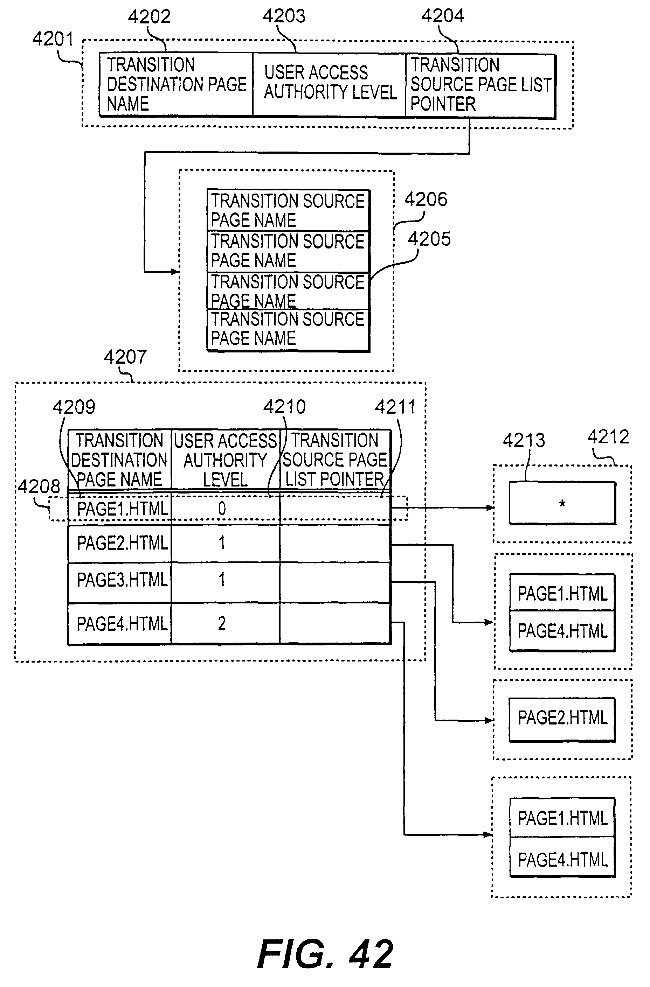

Fig. 42 is a chart to illustrate one example of the rule control table 3505 of this embodiment. A rule control table record format 4201 is a record including fields of a transition destination page name 4202, user access authority level 4203, and transition source page list pointer 4204. In the transition destination page name 4202 is stored the page name character string 3303 of the transition rule file 3503. In the user access authority level 4203 is stored the user access authority level 3305 of the transition rule file 3503. The transition source page list pointer 4204 points to a transition source page list 4206.

In the transition source page list 4206 are stored transition source page names 4205 in a list, in which the rule character strings 3304 of the transition rule file 3503 are extracted by the delimiter ','. A rule control table 4207 illustrates the transition rule file 3503 read out thereon as an example.

Fig. 43 is a flowchart to illustrate the procedure of the analyzing process of a page request URL from the WWW browser of this embodiment. The process 4301 sets the page name 3907 of the transition destination in a temporary variable movePage. The process 4302 sets the temporary variable movePage in the transition destination page name 4010 of the i-th record on the page control table 4006. The process 4303 initializes the control variable L by 0. The number of the control variable L indicates the number of records on the rule control table 4207. The process 4304 adds 1 to the value of the control variable L. The process 4305 compares a transition destination page name 4209 of a record 4208 of the L-th record on the rule control table 4207 with the temporary variable movePage. If the transition destination page name 4209 is coincident with the temporary variable movePage, the process is shifted to the process 4308, and if not coincident, the process advances to the process 4306. The process 4306 judges whether or not the L-th record is the final record on the rule control table 4207. If it is not the final, the process returns to the process 4304, and if it is the final, the process advances to the process 4307. The process 4308 initialises the control variable j by 0. The value of the control variable j indicates the number of records on a transition source page list 4212 of the L-th record 4208 on the rule control table 4207. The process 4309 adds 1 to the control variable j. The process 4310 judges whether or not a transition source page name 4213 of the j-th record on the transition source page list 4212 pointed by a transition source page list pointer 4211 of the L-th record 4208 on the rule control table 4207 is the asterisk '*'. If it is the '*', the process is shifted to the process 4313, and if not, the process advances to the process 4311. The process 4311 compares the transition source page name 4213 of the j-th record on the transition source page list 4212 pointed by the transition source page list pointer 4211 of the L-th record 4208 on the rule control table 4207 with the temporary variable currentPage. If the transition source page name 4213 is coincident with the temporary variable currentPage, the process is shifted to the process 4313, and if it is not coincident, the process advances to the process 4312. The process 4312 judges whether the j-th record on the transition source page list 4212 pointed by the transition source page list pointer 4211 of the L-th record 4208 on the rule control table 4207 is the final record or not. If it is the final, the process returns to the process 4307, and if it is not the final, the process returns to the process 4309. The process 4307 makes the transition impossibility error page 3703 of the system page 3502 to output it to the Web browser program 1526, and ends the flow 4300. The process 4313 checks the user access authority level and outputs the transition destination page.

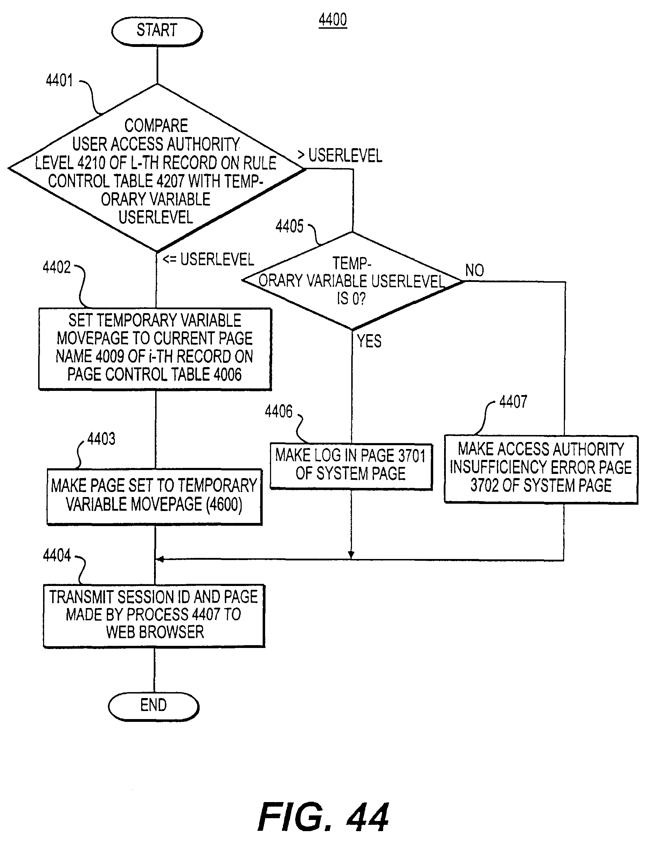

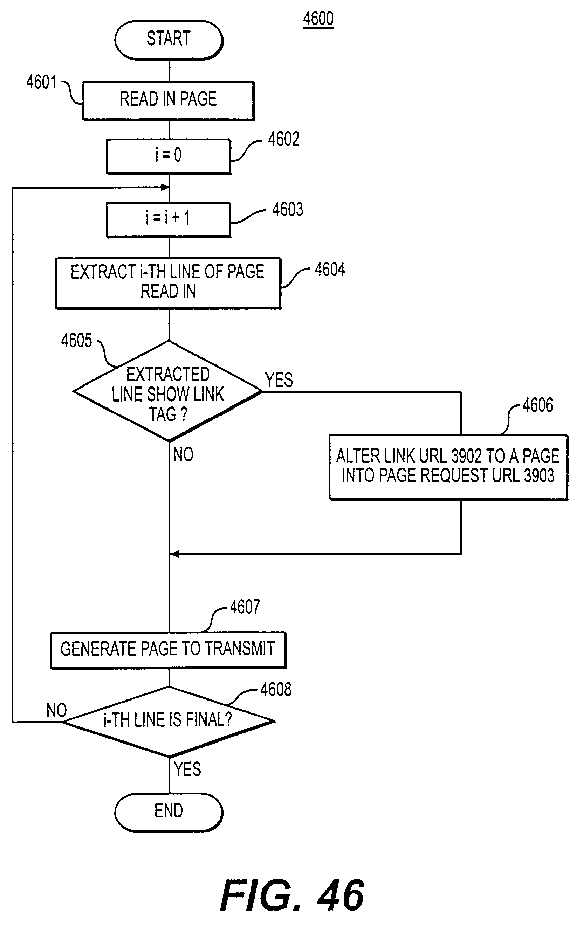

Fig. 44 is a flowchart to illustrate the processing procedure to check the user access authority level of this embodiment. The process 4401 compares the user access authority level 4210 of the L-th record 4208 on the rule control table 4207 with the temporary variable userLevel. If the user access authority level 4210 is larger than the temporary variable userLevel, the process is shifted to the process 4405, and if the user access authority level 4210 is equal to, or smaller than the temporary variable userLevel, the process advances to the process 4402. The process 4402 sets the temporary variable movePage in the current page name 4009 of the i-th record on the page control table 4006. The process 4403 makes a page set by the temporary variable movePage. The detail of the process 4403 will be described with the flow 4600 in Fig. 46.

The process 4405 judges whether the temporary variable userLevel is 0 or not. If the temporary variable userLevel is 0, the process advances to the process 4406, and if it is not 0, the process is shifted to the process 4407. The process 4406 makes the log in page 3701 of the system page 3502, and returns the process to the process 4404. The process 4407 makes the access authority error page 3702 of the system page 3502, and returns to the process 4404. The process 4404 transmits the session ID located at the temporary session ID and the page made by the process 4407 to the Web browser program 1526, and ends the flow 4400.

Fig. 45 is a flowchart to illustrate the procedure of the analyzing process of a reguest from the system page 3502 of this embodiment. The process 4501 judges whether or not the log in ID 3914 is added to a reguest from the WWW browser. If the log in ID 3914 is added, it judges that the request is from the log in page 3701, and advances to the process 4502. If not added, the process is shifted to the process 4507. The process 4502 judges whether the ACTION 3915 of the request from the WWW browser is 'CANCEL' or not. If
the ACTION 3915 is 'CANCEL', the process judges that the request is the previous transition page request URL 3913 of the log in page 3701, the process is shifted to the process 4508. If the ACTION 3915 is not 'CANCEL', the process judges that the request is the user access authority level obtaining request URL 3912 of the log in page 3701.

The process 4503 initializes the control variable k by 0. The value of the control variable k indicates the number of the user control table 4105. The process 4504 adds 1 to the value of the control variable k. The process 4505 compares the user ID and password of the k-th record on the user control table 4105 with the log in ID and password that are inputted on the log in page 3701 to validate the user. If the user ID is coincident with the log in ID, and the password on the user control table 4105 is coincident with the password inputted on the log in page 3701, the process is shifted to the process 4513, and if not coincident, the process advances to the process 4506.

The process 4506 judges whether or not the k-th record on the user control table 4105 is the final one. If the record is not the final, the process returns to the process 4504, and if it is the final, the process ends this flow 4500 in order to receive a request from the WWW browser again, because the legitimate user ID and password do not exist on the user control table 4105. The process 4513 sets the user access authority level of the k-th record on the user control table 4105 in the temporary variable userLevel. The process 4514 sets the temporary variable userLevel in the user access authority level 4008 of the i-th record on the page control table 4006. The process 4515 checks the user access authority level and outputs the transition destination page. The detailed flow is as illustrated in the flow 4400 in Fig. 44.

The process 4507 judges whether the ACTION 3915 of a request from the WWW browser is 'BACK' or not. If the ACTION 3915 is 'BACK', the process judges that the request is the previous transition page request URL 3911 of the access authority insufficiency error page 3702, the process advances to the process 4508. If the ACTION 3915 is not 'BACK', the process judges that the request is the log in page request URL 3910 of the access authority insufficiency error page 3702, the process is shifted to the process 4511. The process 4508 judges whether the temporary variable currentPage is NULL or not. If it is NULL, the process advances to the process 4509, and if it is not NULL, the process is shifted to the proposes 4510. The process 4509 makes the transition impossibility error page 3703 of the system page 3502, and advances the process to the process 4512. The process 4510 makes a page set by the temporary variable currntPage, and advances the process to the process 4512. The process 4511 makes the log in page 3701 of the system page 3502, and advances the process to the process 4512. The process 4512 transmits the session ID located at the temporary variable session ID and the page made to the Web browser program 1526, and ends the flow 4500. According to the foregoing description, even if the page content recording function or the page location recording function is used by the WWW browser while the WWW application is being executed, it becomes possible to prevent the page transition that the designer does not intend, and to control the page transition in accordance with the user access authority level.

Fig. 46 is a flowchart to illustrate the processing procedure of the page generating process 4403 that makes a page to be transmitted to the WWW browser. The process 4601 reads in the page 1515 corresponding to the temporary variable movePage. The process 4602 initializes the control variable i by 0. The value of the control variable i indicates the number of lines read in by the process 4601. The process 4603 adds 1 to the value of the control variable i. The process 4604 extracts the i-th line of the page read in by the process 4601. The process 4605 judges whether or not the extracted line shows the link tag to the page. If it shows the link tag to the page, the process advances to the process 4606, and if it does not show the link tag to the page, the process is shifted to the process 4607. The process 4606 alters the format of the link URL 3902 to a page of the link tag to a page into the format of the page request URL 3903. The process 4607 stores the foregoing extracted line in the buffer for transmitting to the WWW browser, and generates the page. The process 4608 judges whether or not the i-th line is the final line of the page. If it is not the final line, the process returns to the process 4603, and if it is the final line, the process ends this flow.

According to the foregoing description, it becomes possible to restrict a page transition in correspondence with the differences in the user access authority level; and it becomes possible to prevent a page transition by a user not legitimate or by a user not having a proper access authority. Next, one example of description of a page to which a unique tag is added in order to alter the displayed content of a page in correspondence with the user access authority level will be described.

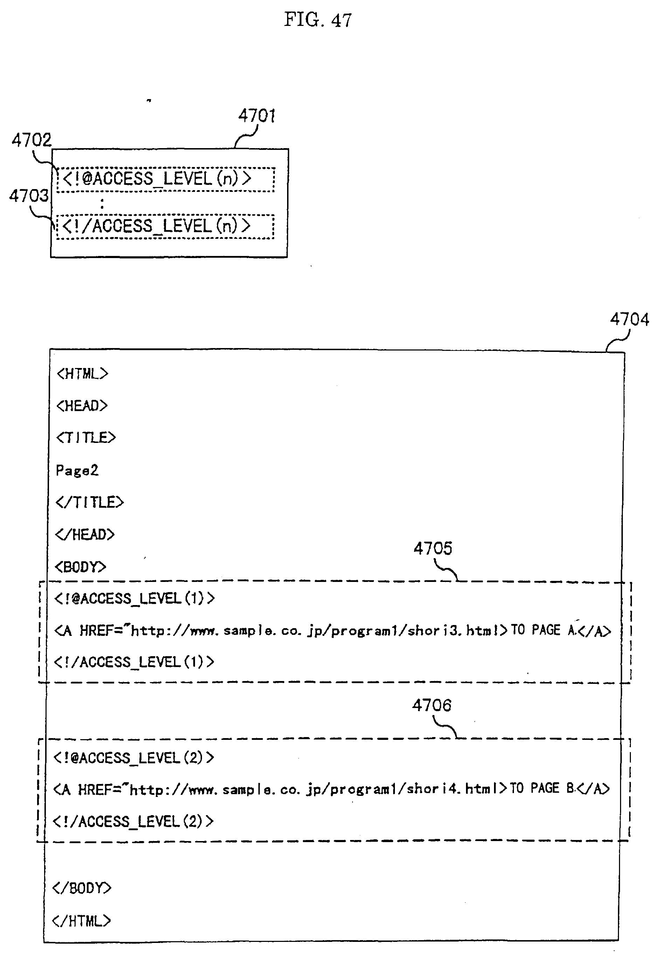

Fig. 47 illustrates one example of HTML to alter the displayed content of a page in correspondence with the user access authority level of this embodiment. An access level tag 4701 is a description example of a page to alter the displayed content of the page in correspondence with the user access authority level. The 'n' of the access level tag represents the argument of the access level tag. The value of the argument indicates the lowest user access authority level that can be displayed. A group of tags inserted between an access level start tag 4702 and an access level end tag 4703 becomes displayed only when the user access authority level is equal to or higher than 'n'. A page 4704 illustrates, as an example, a page link tag 4705 inserted between the tags of the access level 1 that can be displayed only when the user access authority level is equal to or higher than '1', and a page link tag 4706 inserted between the tags of the access level 2 that can be displayed only when the user access authority level is equal to or higher than '2'. According to the foregoing description, it becomes possible to define the description of a page in which the displayed content of a page is altered in correspondence with the user access authority level.

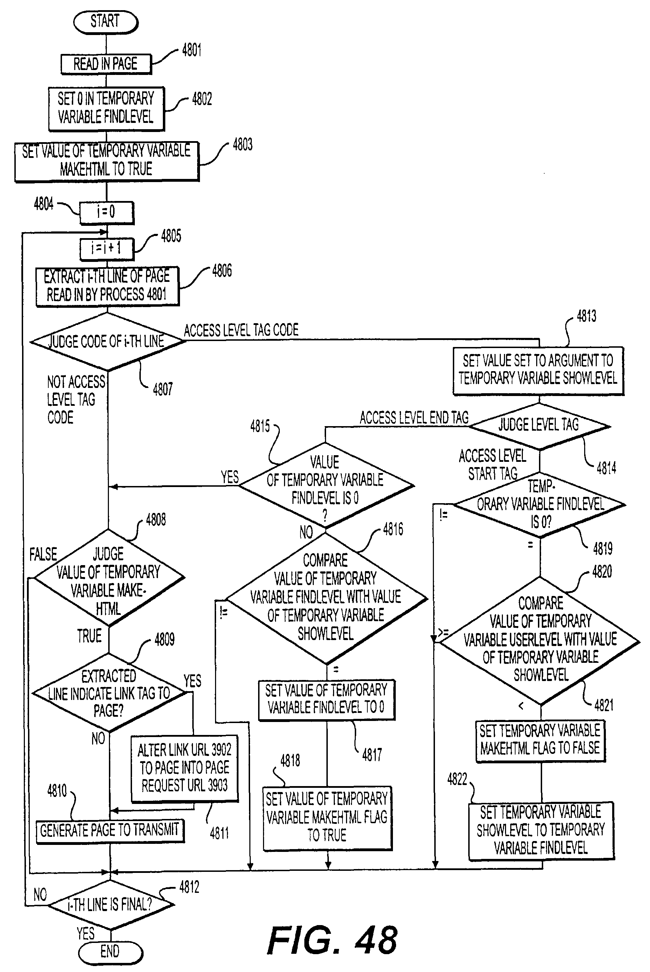

Fig. 48 is a flowchart to illustrate the processing procedure to alter the displayed content of a page in correspondence with the user access authority level of this embodiment. This flow is a detailed flow in which the process to alter the displayed content of a page in correspondence with the user access authority level is added to the flow 4600 of the process 4403. The process 4801 reads in the page 1515 corresponding to the temporary variable movePage from the directory 1514. The process 4802 sets 0 in the temporary variable findLevel. The value of the temporary variable findLevel holds the value of the argument of the access level start tag 4702. The process 4803 sets the value of the temporary variable makeHTML to TRUE. If the value of the temporary variable makeHTML is 'TRUE', the process generates a code to thereby make a state that the code currently processed can be displayed. If the value is 'FALSE', the process does not generate a code, thereby making a state that the code currently processed cannot be displayed. The process 4804 initializes the control variable i by 0. The value of the control variable i indicates the line number of the page read in by the process 4801. The process 4805 adds 1 to the value of the control variable i. The process 4806 extracts the i-th line of the page read in by the process 4801. The process 4807 judges the code of the i-th line extracted by the process 4806. If the i-th line indicates the access level tag code, the process is shifted to the process 4813, and if it indicates other than the access level tag code, the process advances to the process 4808. The process 4808 judges the value of the temporary variable makeHTML. If the temporary variable makeHTML flag is TRUE, the process advances to the process 4809 for generating a code, and if it is FALSE, the process does not generate a code and shifts to the process 4812. The process 4809 judges whether the extracted line indicates a link tag to a page. If it indicates a link tag to a page, the process shifts to the process 4811, and if it does not, the process advances to the process 4810. The process 4811 alters the format of the link URL 3902 to a page of the link tag to a page into the format of the page request URL 3903. The process 4810 stores the foregoing extracted line in the buffer for transmitting to the WWW browser. The process 4813 sets the value set in the argument of the access level code in the temporary variable showLevel. The process 4814 judges whether the access level code extracted by the process 4806 is the access level start tag 4702 or the access level end tag 4703. If it is the access level start tag 4702, the process shifts to the process 4819, and if it is the access level end tag 4703, the process advances to the process 4815. The process 4819 judges whether the temporary variable findLevel is 0 or not. If the temporary variable findLevel is 0, the process advances to the process 4820 to judge whether the code interpolated between the access level tags can be displayed or not. If the temporary variable findLevel is other than 0, the process returns to the process 4812, since the code is already impossible to display. The process 4820 compares the value set in the temporary variable userLevel in the process 4513 with the value of the temporary variable showLevel. If the value of the temporary variable userLevel is smaller than the value of the temporary variable showLevel, the process advances to the process 4821, in order to make it impossible to display the code interpolated between the access level tags. If the value of the temporary variable userLevel is equal to or larger than the value of the temporary variable showLevel, the process returns to the process 4812, since the display is possible. The process 4821 sets the temporary variable makeHTML flag to FALSE. The process 4822 sets the temporary variable showLevel to the temporary variable findLevel. The process 4815 judges whether the value of the temporary variable findLevel is 0 or not. If the temporary variable findLevel is 0, the process returns to the process 4808, and if the value of the temporary variable findLevel is other than 0, the process advances to the process 4816. The process 4816 compares the value of the temporary variable findLevel with the value of the temporary variable showLevel. If the value of the temporary variable findLevel is not equal to the value of the temporary variable showLevel, the process returns to the process 4812, since the code is impossible to display.

If the value of the temporary variable findLevel is equal to the value of the temporary variable showLevel, the process judges the access level end tag 4703 to be paired with the access level start tag 4702, and advances to the process 4817 that makes the display possible. The process 4817 sets the value of the temporary variable findLevel to 0. The process 4818 sets the value of the temporary variable makeHTML flag to TRUE. The process 4812 judges whether the i-th line is the final line or not. If it is not the final line, the process returns to the process 4805. If it is the final, the process ends this flow.

According to the foregoing description, it becomes possible to alter the displayed content of a page by way of the differences in the user access authority level even when transited to the same page.

According to the page transition system of this embodiment thus described, the page transition is made to comply with the page transition rule to present the transition source page that is permitted to transit to a specific transition destination; and therefore, it is possible to prevent a page transition that the designer does not intend when the page transition having a rule of order in the page transition is executed.

According to the page transition system of this embodiment, the page transition rule of each transition destination page is outputted to the transition rule file; and therefore, it is possible to collectively control a plurality of page transition rules.

According to the page transition system of this embodiment, the user access authority level to present the access authority whereby the transition to a transition destination page is allowed is set in the page transition rule, and the page transition is made in accordance with the user access authority; and therefore, it is possible to set different access authorities on each of the transition destination pages having a rule of order in the page transition.

Further, according to the page transition system of this embodiment, the log in page is made when the access authority to the transition destination page is insufficient; and therefore, it is possible to continue the page transition by altering the user access authority when the access authority required for the page transition becomes insufficient in the middle of the page transition having a rule of order.

### EMBODIMENT 3

The page transition system of the embodiment 3 will hereafter be described, in which the client computer controls the display of pages transmitted from the WWW server.

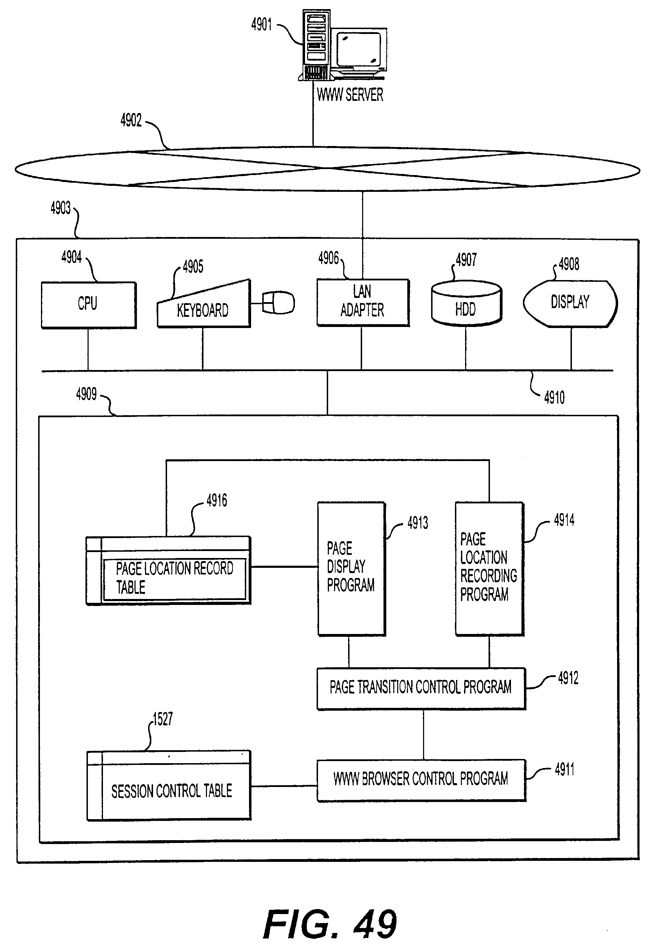

Fig. 49 is a chart to illustrate a functional construction of the WWW browser program of this embodiment. A computer 4901 represents a WWW server computer. An area 4903 surrounded by a solid line represents a client computer. The server computer 4901 and the client computer 4903 communicate with each other through a network 4902.

The client computer 4903 comprises a CPU 4904 to execute and interpret the program, memory 4909 in which the program is loaded, external storage unit 4907 to store the program and data, LAN adapter 4906 for connecting the computer to the network, keyboard 4905 for inputting data, and display 4908 for presenting output data; and further, the CPU 4904, memory 4909, external storage unit 4907, LAN adapter 4906, keyboard 4905, and display 4908 are connected by a bus 4910 for mutually transmitting and receiving data. In the memory 4909 is loaded the WWW browser program of this embodiment. The WWW browser program comprises a WWW browser control program 4911 that transmits a request to obtain a page to the server computer 4901, and receives the page corresponding to the foregoing page request, the session control table 1527 to determine the connection with the server computer 4901, a page transition control program 4912 to judge whether a page received from the server computer 4901 is a page as an object of the page transition control or not, a page display program 4913 to present a page received from the server 4901 on the basis of a judgment by the page transition control program 4912, and a page location recording program 4914 that temporarily stores a page content displayed by the page display program 4913 on the basis of a judgment by the page transition control program 4912 in the external storage unit 4907, and records a location of the page stored in the external storage unit 4907 on a page location record table 4916. The foregoing program to make the client computer 4903 function as a page transition execution device to execute a transition between a plurality of pages is recorded in a recording medium such as a CD-ROM or the like, is stored in a storage unit such as a magnetic disk or the like, and is loaded into a memory to be executed. Further, the medium to record the foregoing program may be the other recording medium than the CD-ROM.

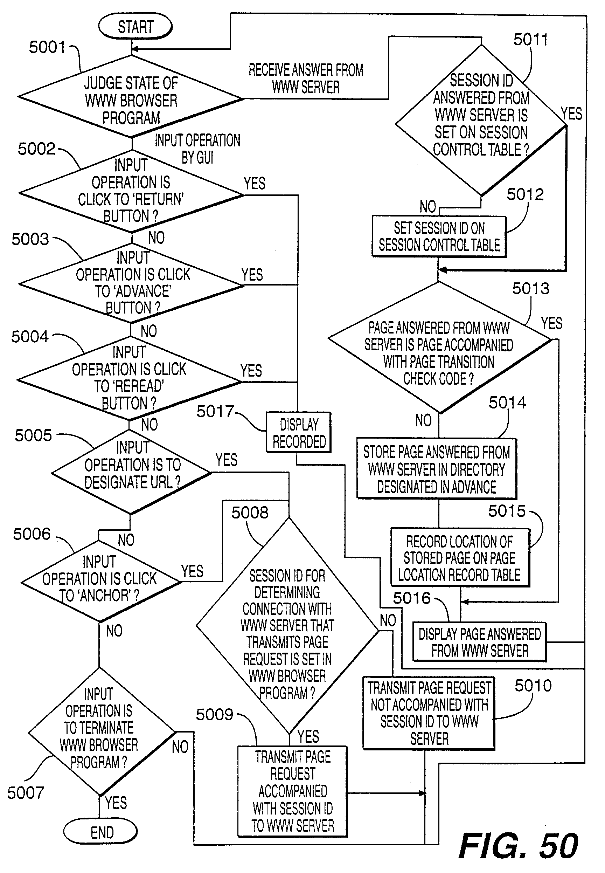

Fig. 50 is a flowchart to illustrate the processing procedure of the WWW browser program of the client computer 4903 relating to this embodiment. The process 5001 judges the state of the WWW browser program. If the state of the WWW browser program is a judgment of an input operation by a user, the process advances to the process 5002, and if the state is a reception of a response transmitted back from the server computer 4901, the process shifts to the process 5011. The process 5002 judges whether the input operation by a user is a click to the 'return' button to return a page to the preceding page. If the input operation by a user is a click to the 'return' button, the process shifts to the process 5017, and if it is not a click to the 'return' button, the process advances to the process 5003. The process 5003 judges whether the input operation by a user is a click to the 'advance' button to advance a page to the following page. If the input operation by a user is a click to the 'advance' button, the process shifts to the process 5017, and if it is not a click to the 'advance' button, the process advances to the process 5004. The process 5004 judges whether the input operation by a user is a click to the 'reread' button for presenting a current page again. If the input operation by a user is a click to the 'reread' button, the process shifts to the process 5017, and if it is not a click to the 'reread' button, the process advances to the process 5005. The process 5005 judges whether the input operation by a user is an input to the 'URL' text input area for directly designating a URL. If the input operation by a user is a URL input to the 'URL' text input area, the process shifts to the process 5008, and if it is not an input to the 'URL' text input area, the process advances to the process 5006. The process 5006 judges whether the input operation by a user is a click to the 'anchor' attached to a page. If the input operation by a user is a click to the 'anchor' attached to a page, the process shifts to the process 5008, and if it is not a click to the 'anchor' attached to a page, the process advances to the process 5007. The process 5007 judges whether or not the input operation by a user is to terminate the WWW browser program. If the input operation by a user is to terminate the WWW browser program, the process ends this flow, and deletes the WWW browser program that has been loaded in the memory 4909. If it is not to terminate the WWW browser program, the process returns to the process 5001.

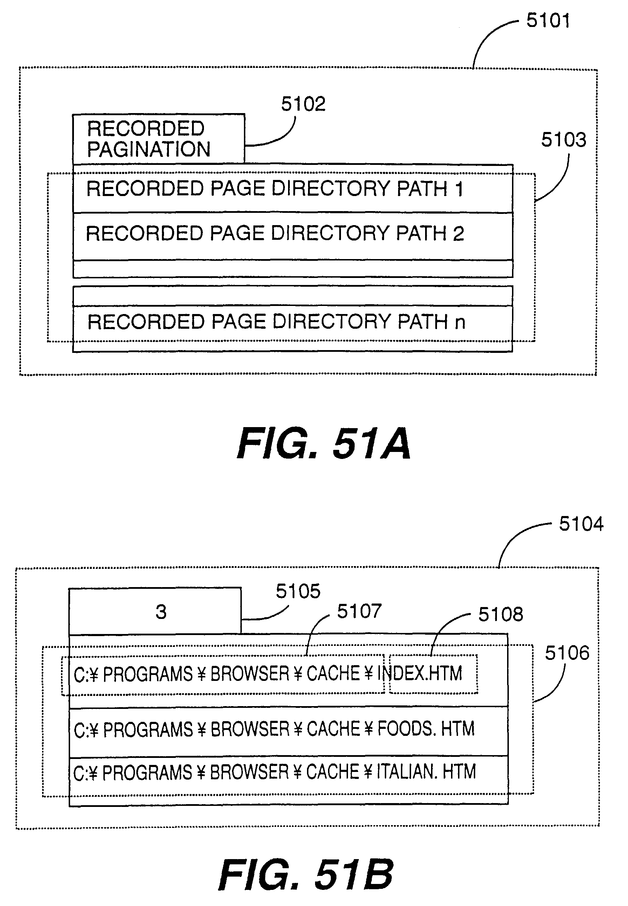

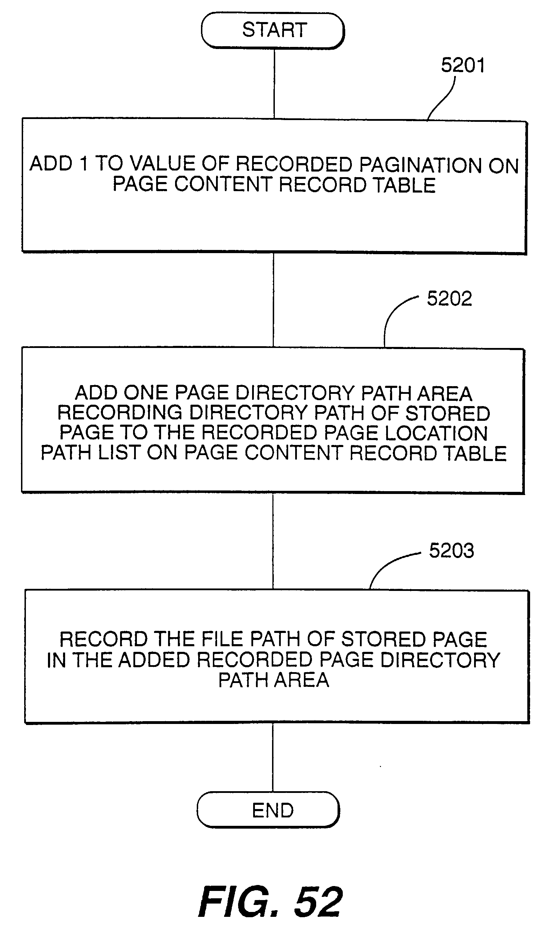

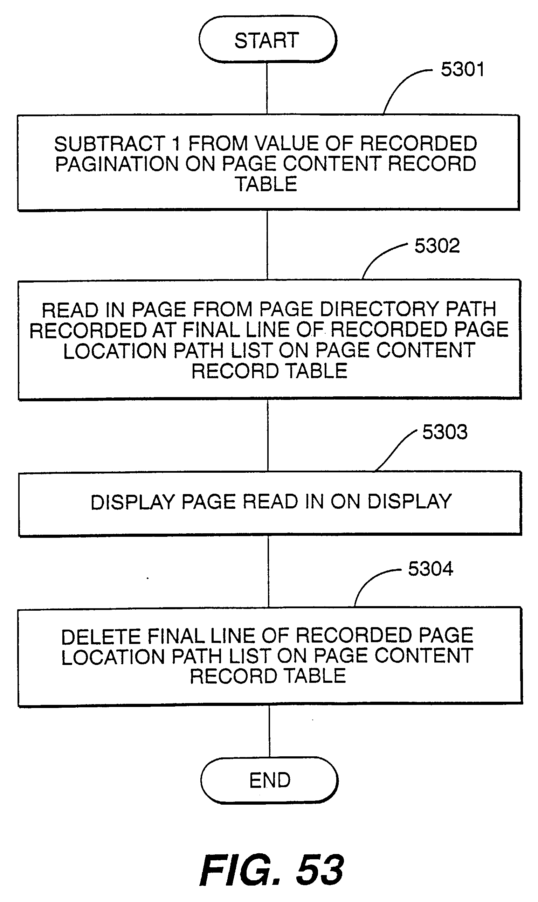

The process 5008 judges whether a session ID is set on the session control table 1527 of the WWW browser program or not. The foregoing session ID is an identifier to uniquely determine a connection with the server computer 4901 that transmits a page request from the WWW browser program. When a first page request instruction is transmitted to the server computer 4901 from the WWW browser program, the session ID is generated by the server computer 4901 as a result of the page request instruction, which is transmitted back to the WWW browser program in a pair with an answer page. The session ID answered back to the WWW browser program is set on the session control table 1527 in a pair with the URL of the requested page. If the session ID is set on the session control table 1527, the process advances to the process 5009, and if the session ID is not set on the session control table 1527, the process shifts to the process 5010. The process 5009 transmits a page request instruction accompanied with a session ID to the server computer 4901. The foregoing instruction includes a URL of a page requested to the computer 4901 and a session ID. The process 5010 transmits a page request instruction not accompanied with a session ID to the server computer 4901. The foregoing instruction only includes the URL of a page requested to the computer 4901. The process 5011 judges whether or not the session ID answered back from the server computer 4901 is set on the session control table 1527. If the session ID is set on the session control table 1527, the process shifts to the process 5013, and if the session ID is not set on the session control table 1527, the process advances to the process 5012. The process 5012 sets the session ID answered back from the server computer 4901 in a pair with the URL of the page requested to the server computer 4901 on the session control table 1527. The process 5013 judges whether or not the page answered back from the server computer 4901 is a page accompanied with a page transition check code. Fig. 14 illustrates one example of a page accompanied with a page transition check template statement as the page transition check code. The inside of a solid line frame 1401 illustrates the page accompanied with a page transition check code. The page accompanied with a page transition check code is a page in which the page transition check code illustrated inside a dotted line frame 1402 is described at the top line. If the page transition check code is described at the top line of the page answered back from the server computer 4901, the process shifts to the process 5016, and if the page transition check code is not described at the top line of the page answered back from the server computer 4901, the process advances to the process 5014.
The process 5014 stores the page answered back from the server computer 4901 in a directory inside the external storage unit 4907 that the WWW browser program has designated in advance. The process 5015 records a location of the page stored in the external storage unit 4907 on the page location record table 4916. The detail of the page location record table 4916 and the detail of the process 5015 will be described with reference to Fig. 51 and Fig. 52, respectively. The process 5016 displays the page answered back from the server computer 4901 on the display 4908. The process 5017 reads in the page from the location of the page recorded on the page location record table 4916, and displays the page read in on the display 4908. The detail of the process 5016 will be described with reference to Fig. 53.

Figs. 51A and 51B illustrates a format of the page location record table 4916 by way of a dotted line frame 5101. The page location record table 4916 comprises a recorded pagination 5102 to indicate the total number of pages stored in a directory inside the external storage unit 4907 that the WWW browser program has designated in advance, and a recorded page location path list 5103 to hold directory paths of the pages stored. A dotted line frame 5104 contains one example in which concrete data are recorded on the page location record table 4916. In a recorded pagination 5105 is recorded '3' to indicate the total number of pages stored in a directory inside the external storage unit 4907 that the WWW browser program has designated in advance. In a dotted line frame 5106 are recorded three directory paths inside the external storage unit 4907 to store the pages recorded. A dotted line frame 5107 shows a directory path inside the external storage unit 4907 that the WWW browser program has designated in advance. A dotted line frame 5108 shows a page name.

Fig. 52 illustrates a detailed flow of the process 5015 that records a location of a page stored in the external storage unit 4907 on the page location record table 4916. The process 5201 adds 1 to the value of the record pagination 5102 on the page content record table 5101. The process 5202 adds one page directory path area to record a directory path of a page stored in the external storage unit 4907 to the recorded page location path list 5103 on the page content record table 5101. The process 5203 records a file path of the page stored in the external storage unit 4907 in the added recorded page directory path area.

Fig. 53 illustrates a detailed flow of the process 5017 that reads in a page from a location of a page stored on the page location record table 4916, and displays the page read in on the display 4908. The process 5301 subtracts 1 from the value of the record pagination 5102 on the page content record table 4901. The process 5302 reads in a page from the recorded page directory path recorded at the final line of the recorded page location path list 5103 on the page content record table 4901. The process 5303 displays the page read in on the display 4908. The process 5304 deletes the final line of the recorded page location path list 5103 on the page content record table 4901.

According to the foregoing description, it becomes possible to prevent a page transition that the designer does not intend, even when the WWW browser employs the page content recording function while the WWW application is being executed.

According to the present invention, the page transition is executed in accordance with the page transition rule to present a transition source page that is permitted to transit to a specific transition destination page; and therefore, it is possible to prevent a page transition that the designer does not intend, while a page transition having a rule of order in the page transition is performed.

While the present invention has been described above in conjunctions with the preferred embodiments, one of ordinary skill in the art would be enabled by this disclosure to make various modifications to these embodiments and still be within the scope and spirit of the present invention as recited in the appended claims.

## Claims

1. A page transition definition system for defining a transition between a plurality of pages, comprising the steps of:
extracting a transition destination page transiting from a transition source page, and setting said transition source page and the extracted transition destination page as a pair on a page transition table,
setting on the page transition table a transition source fixing flag that indicates whether or not to permit transition to said transition destination page from other than a specific transition source page,
extracting a transition source page transiting to a transition destination page from the page transition table, and setting said transition destination page and the extracted transition source page as a pair on a transition rule table, and
reading out the transition source pages of the transition destination pages from the transition rule table, and adding a page transition rule indicating the transition source page permitted to transit to said transition destination page to said transition destination page as a transition source check template statement.

2. A page transition definition system for defining a transition between a plurality of pages, comprising the steps of:
extracting a transition destination page transiting from a transition source page, and setting said transition source page and the extracted transition destination page as a pair on a page transition table,
setting on the page transition table a transition source fixing flag that indicates whether or not to permit the transition to said transition destination page from other than a specific transition source page,
extracting a transition source page transiting to a transition destination page from the page transition table, and setting said transition destination page and the extracted transition source page as a pair on a transition rule table, and
reading out the transition source pages of the transition destination pages from the transition rule table, and outputting a page transition rule indicating the transition source page permitted to transit to said transition destination page to a transition rule file.

3. The system of claim 1 or 2, wherein a user access authority level to indicate an access authority whereby a transition to said transition destination page is allowed is set in the page transition rule.

4. A page transition definition device for defining a transition between a plurality of pages, comprising:
page read-in processing means for extracting a transition destination page transiting from a transition source page, and setting said transition source page and the extracted transition destination page as a pair on a page transition table,
page edit processing means for setting on the page transition table a transition source fixing flag that indicates whether or not to permit the transition to said transition destination page from other than a specific transition source page,
transition rule generating/processing means for extracting a transition source page transiting to a transition destination page from the page transition table, and setting said transition destination page and the extracted transition source page as a pair on a transition rule table, and
page generating/processing means for reading out the transition source pages of the transition destination pages from the transition rule table, and adding a page transition rule indicating the transition source page permitted to transit to said transition destination page to said transition destination page as a transition source check template statement.

5. A page transition definition device to define a transition between a plurality of pages, comprising:
page read-in processing means for extracting a transition destination page transiting from a transition source page, and setting said transition source page and the extracted transition destination page as a pair on a page transition table,
page edit processing means for setting on the page transition table a transition source fixing flag that indicates whether or not to permit the transition to said transition destination page from other than a specific transition source page,
transition rule generating/processing means for extracting a transition source page transiting to a transition destination page from the page transition table, and setting said transition destination page and the extracted transition source page as a pair on a transition rule table, and
transition rule outputting/processing means for reading out the transition source pages of the transition destination pages from the transition rule table, and outputting a page transition rule indicating the transition source page permitted to transit to said transition destination page to a transition rule file.

6. A medium having a program recorded thereon for making a computer function as the page transition definition device of claim 4 or 5.

7. A medium having data recorded thereon which possess a structure in which a transition between a plurality of pages is defined, and wherein data recorded thereon has a structure in which a page transition rule indicating a transition source page permitted to transit to a transition destination page is added to said transition destination page.

8. A medium having data recorded thereon which possess a structure in which a transition between a plurality of pages is defined, and wherein data recorded thereon has a structure in which a page transition rule indicating a transition source page permitted to transit to transition destination pages is outputted to a transition rule file.

9. The device of claim 4 or 5 or the medium of any one of claims 6 to 8, wherein the page transition rule holds a user access authority level to indicate an access authority whereby a transition to said transition destination page is allowed.

10. A page transition execution method for executing a transition between a plurality of pages, comprising the steps of:
controlling a current page name to indicate a page currently transiting for each session, and setting the page name on a page control table,
reading out a page transition rule indicating a transition source page permitted to transit to a transition destination page from a transition source check template statement added to said transition destination page, and executing the transition to said transition destination page when the current page name of a session to which the transition to said transition destination page is requested is coincident with the transition source page of the page transition rule, and
generating a page for rejecting the transition to said transition destination page when the current page name is not coincident with the transition source page of the page transition rule.

11. A page transition execution method for executing a transition between a plurality of pages, comprising the steps of:
controlling a current page name to indicate a page currently transiting for each session, and setting the page name on a page control table,
reading out a page transition rule indicating a transition source page permitted to transit to transition destination pages from a transition rule file, and executing the transition to said transition destination page when the current page name of a session to which the transition to said transition destination page is requested is coincident with the transition source page of the page transition rule, and
generating a page for rejecting the transition to said transition destination page when the current page name is not coincident with the transition source page of the page transition rule.

12. The method of claim 10, having a step of reading out from the page transition rule a user access authority level to indicate an access authority whereby a transition to said transition destination page is allowed, and wherein
the step of executing a transition to the transition destination page executes the transition to the transition destination page, when the user access authority level of a user who requests the transition to said transition destination page is equal to or higher than the user access authority level whereby the transition to said transition destination page is allowed, and
the step of generating a page for rejecting the transition to the transition destination page generates a page for rejecting the transition to said transition destination page, when the user access authority level of the user who requests the transition to said transition destination page is lower than the user access authority level whereby the transition to said transition destination page is allowed.

13. The method of claim 11 or 12, wherein the step of generating a page for rejecting a transition to the transition destination page generates, when the user access authority level of the user who requests the transition to said transition destination page is lower than the user access authority level whereby the transition to said transition destination page is allowed, a log in page for executing the transition to said transition destination page by means of a higher user access authority level.

14. A server computer for executing a transition between a plurality of pages, comprising:
session control means that controls a current page name to indicate a page currently transiting for each session, and sets the page name on a page control table,
page transition control means that reads out a page transition rule indicating a transition source page permitted to transit to a transition destination page from a transition source check template statement added to said transition destination page, and executes a transition to said transition destination page when the current page name of a session to which the transition to said transition destination page is requested is coincident with the transition source page of the page transition rule, and
page generating/processing means that generates a page for rejecting the transition to said transition destination page, when the current page name is not coincident with the transition source page of the page transition rule.

15. A server computer for executing a transition between a plurality of pages, comprising:
session control means that controls a current page name to indicate a page currently transiting for each session, and sets the page name on a page control table,
transition rule file read-in means for reading out a page transition rule indicating a transition source page permitted to transit to transition destination pages from a transition rule file,
page transition control means for executing a transition to said transition destination page, when the current page name of a session to which the transition to said transition destination page is requested is coincident with the transition source page of the page transition rule, and
page generating/processing means that generates a page for rejecting the transition to said transition destination page, when the current page name is not coincident with the transition source page of the page transition rule.

16. The server computer claim 14 or 15, wherein:
the page transition control means reads out from the page transition rule a user access authority level to indicate an access authority whereby a transition to said transition destination page is allowed, and executes the transition to the transition destination page, when the user access authority level of a user who requests the transition to said transition destination page is equal to or higher than the user access authority level whereby the transition to said transition destination page is allowed, and
the page generating/processing means generates a page for rejecting the transition to said transition destination page, when the user access authority level of the user who requests the transition to said transition destination page is lower than the user access authority level whereby the transition to said transition destination page is allowed.

17. The server computer of any one of claims 14 to 16, wherein the page generating/processing means generates, when the user access authority level of the user who requests the transition to said transition destination page is lower than the user access authority level whereby the transition to said transition destination page is allowed, a log in page for executing the transition to said transition destination page by means of a higher user access authority level.

18. A medium having a program recorded thereon for making a computer function as the server computer of claim 14 or 15.

19. A page transition execution system for executing a transition between a plurality of pages, comprising the steps of:
judging whether or not a transition destination page received from a server computer is a page of a page transition control object in which the transition is executed by a page transition rule indicating a transition source page permitted to transit to said transition destination page,
storing a content of said transition destination page temporarily, and recording a location of said stored transition destination page on a page location record table, when the transition destination page received from the server computer is judged not to be the page of the page transition control object, and
displaying the transition destination page received from the server computer, or the transition destination page temporarily stored.

20. A client computer for executing a transition between a plurality of pages, comprising:
page transition control means for judging whether or not a transition destination page received from a server computer is a page of a page transition control object in which the transition is executed by a page transition rule indicating a transition source page permitted to transit to said transition destination page,
page location recording/processing means for storing a content of said transition destination page temporarily, and recording a location of said stored transition destination page on a page location record table, when the page transition control means judges that the transition destination page received from the server computer is not the page of the page transition control object, and
page display means for displaying the transition destination page received from the server computer, or the transition destination page temporarily stored by the page location recording/processing means.

21. A medium having a program recorded thereon for making a computer function as the client computer of claim 20.

22. A recording medium having stored thereon a program which causes a computer to perform page transition according to the method of claim 1 or 2.
